(19) Europäisches Patentamt
European Patent Office
Office européen des brevets

(11) **EP 4 379 423 A1**

(12) **EUROPEAN PATENT APPLICATION**
published in accordance with Art. 153(4) EPC

(43) Date of publication:
**05.06.2024 Bulletin 2024/23**

(21) Application number: **22849526.3**

(22) Date of filing: **27.07.2022**

(51) International Patent Classification (IPC):
**G01S 17/894** $^{(2020.01)}$ **G01S 7/487** $^{(2006.01)}$

(52) Cooperative Patent Classification (CPC):
**G01S 7/487; G01S 17/894**

(86) International application number:
**PCT/JP2022/028891**

(87) International publication number:
**WO 2023/008465 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.07.2021 JP 2021122784**

(71) Applicant: **Nuvoton Technology Corporation
Japan
Nagaokakyo City, Kyoto 617-8520 (JP)**

(72) Inventors:
• **KANEMARU, Masaki
Nagaokakyo City, Kyoto 617-8520 (JP)**
• **KAWAI, Yoshinao
Nagaokakyo City, Kyoto 617-8520 (JP)**
• **HIRAOKA, Toshiaki
Nagaokakyo City, Kyoto 617-8520 (JP)**

(74) Representative: **Novagraaf International SA
Chemin de l'Echo 3
1213 Onex, Geneva (CH)**

(54) **DISTANCE MEASUREMENT APPARATUS AND DISTANCE MEASUREMENT METHOD**

(57) A distance measuring device (1) includes: a light source (2) that emits irradiation light; a solid-state imaging device (4) that generates, for each of pixels, a plurality of packets that hold signal charges generated at different exposure timings for the irradiation light; and a signal processing circuit (6) that calculates a distance value based on the plurality of packets. For each of the pixels, the signal processing circuit (6): determines presence or absence of stray light using the plurality of packets corresponding to the pixel; when it is determined that there is no stray light, calculates a distance value of the pixel using a first process; and when it is determined that there is stray light, calculates a distance value of the pixel using a second process different from the first process.

FIG. 7C

EP 4 379 423 A1

**Description**

[Technical Field]

The present invention relates to distance measuring devices and distance measurement methods.

[Background Art]

PTL 1 discloses a distance measuring device that performs time-of-flight (TOF) distance calculation.

[Citation List]

[Patent Literature]

[PTL 1] Japanese Patent No. 6676866

[Summary of Invention]

[Technical Problem]

However, when stray light such as a multipath or a flare is mixed into reflected light, there is an influence of the stray light such that errors occur in distance calculations.
The present disclosure is conceived in view of such problems described above and has an object to provide a distance measuring device and a distance measurement method that reduce the influence of stray light.

[Solution to Problem]

To achieve the above object, a distance measuring device according to one aspect of the present disclosure includes: a light source that emits irradiation light; a solid-state imaging device that generates, for each of pixels, a plurality of packets that hold signal charges generated at different exposure timings for the irradiation light; and a signal processing circuit that calculates a distance value based on the plurality of packets. For each of the pixels, the signal processing circuit: determines presence or absence of stray light using the plurality of packets corresponding to the pixel; when it is determined that there is no stray light, calculates a distance value of the pixel using a first process; and when it is determined that there is stray light, calculates a distance value of the pixel using a second process different from the first process.
A distance measurement method according to one aspect of the present disclosure uses a solid-state imaging device and a light source that emits irradiation light, and includes the following to be executed for each of pixels: generating a plurality of packets that hold signal charges generated at different exposure timings for the irradiation light; determining presence or absence of stray light using the plurality of packets corresponding to the pixel; when it is determined that there is no stray light, calculating a distance value of the pixel using a first process; and when it is determined that there is stray light, calculating a distance value of the pixel using a second process different from the first process.
Note that these general or specific aspects may be achieved by a system, a method, an integrated circuit, a computer program, a computer-readable recording medium such as a CD-ROM, or any combination thereof.

[Advantageous Effects of Invention]

With the distance measuring device and the distance measurement method according to the present disclosure, the influence of stray light can be reduced.

[Brief Description of Drawings]

[FIG. 1]

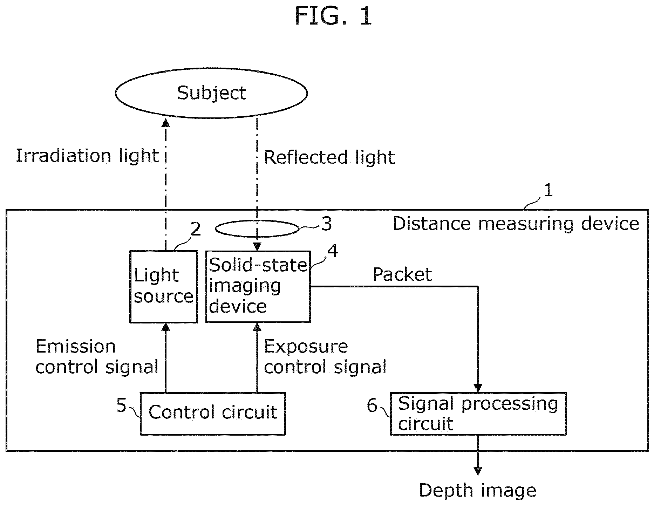

FIG. 1 is a block diagram illustrating an example of the configuration of a distance measuring device according to Embodiment 1.
[FIG. 2]

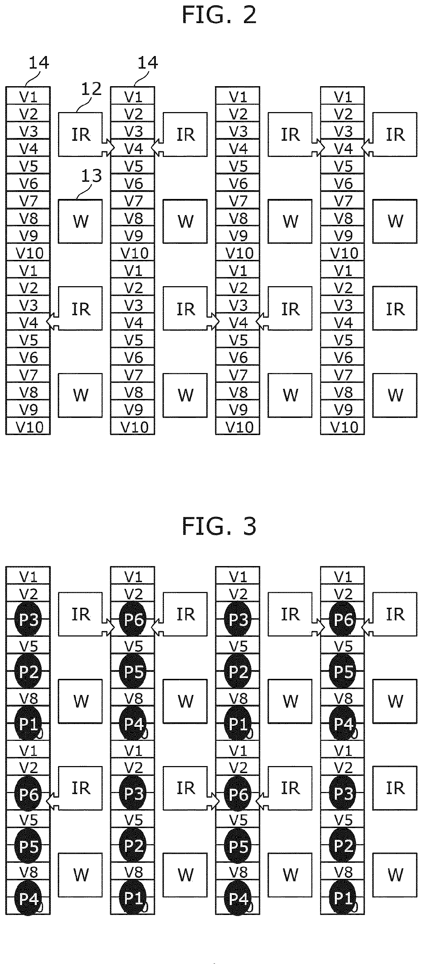

FIG. 2 is a block diagram illustrating an example of the configuration of a solid-state imaging device in FIG. 1.

[FIG. 3]
FIG. 3 is an illustration showing an example of six types of packets formed during a distance measurement operation according to Embodiment 1.
[FIG. 4A]

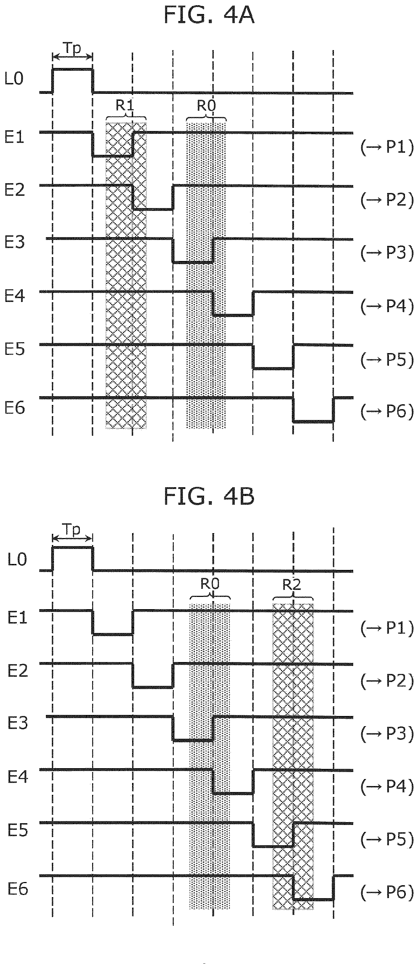

FIG. 4A is a time chart illustrating an example of an operation performed by the distance measuring device according to Embodiment 1.
[FIG. 4B]
FIG. 4B is a time chart illustrating an example of an operation performed by the distance measuring device according to Embodiment 1.
[FIG. 5]

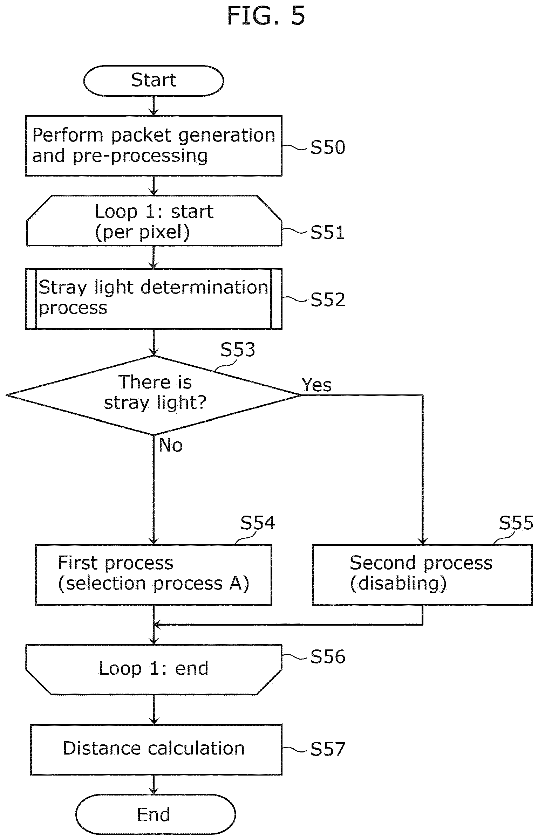

FIG. 5 is a flowchart illustrating an example of an operation performed by the distance measuring device according to Embodiment 1.
[FIG. 6]

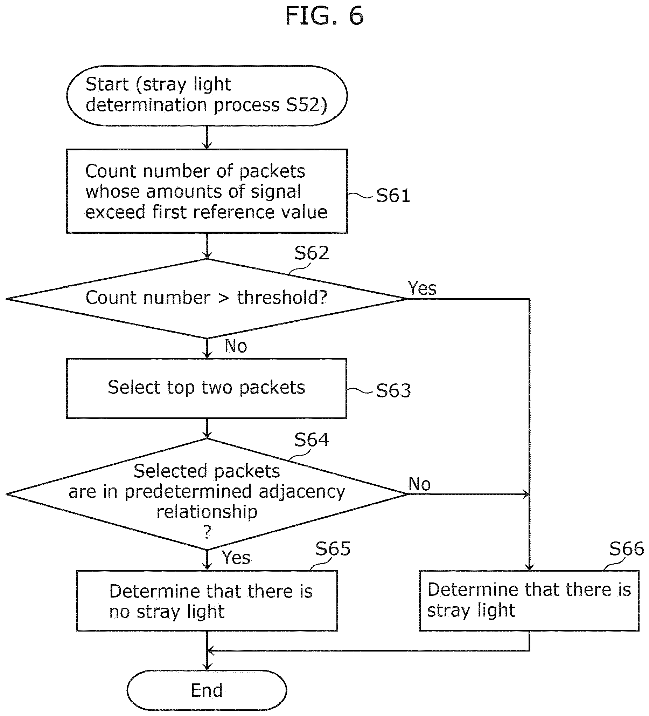

FIG. 6 is a flowchart illustrating one example of a stray light determination process in FIG. 5.
[FIG. 7A]

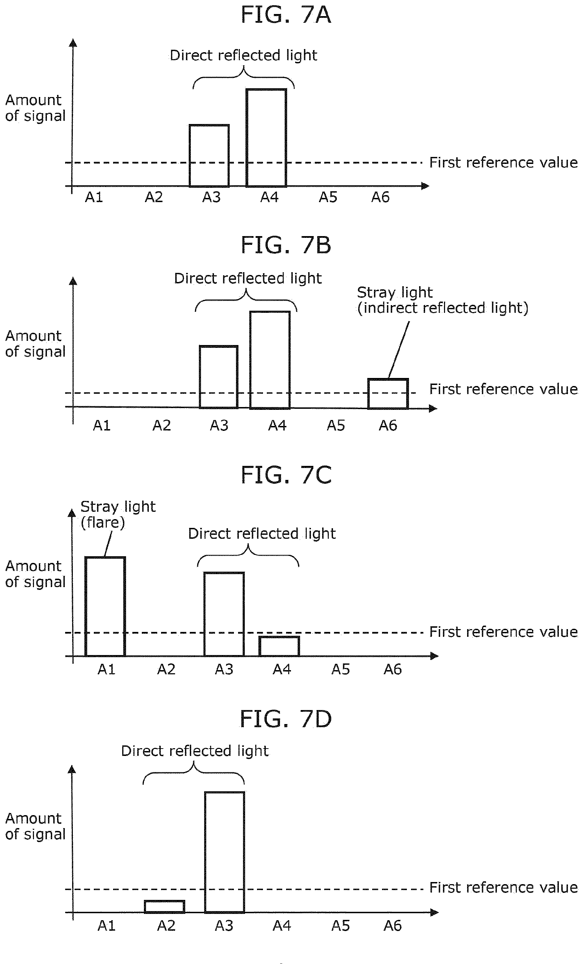

FIG. 7A is a diagram illustrating an example of an amount of signal of a packet when there is no stray light.
[FIG. 7B]
FIG. 7B is a diagram illustrating an example of an amount of signal of a packet when there is stray light.
[FIG. 7C]
FIG. 7C is a diagram illustrating another example of an amount of signal of a packet when there is stray light.
[FIG. 7D]
FIG. 7D is a diagram illustrating another example of an amount of signal of a packet when there is no stray light.
[FIG. 8]

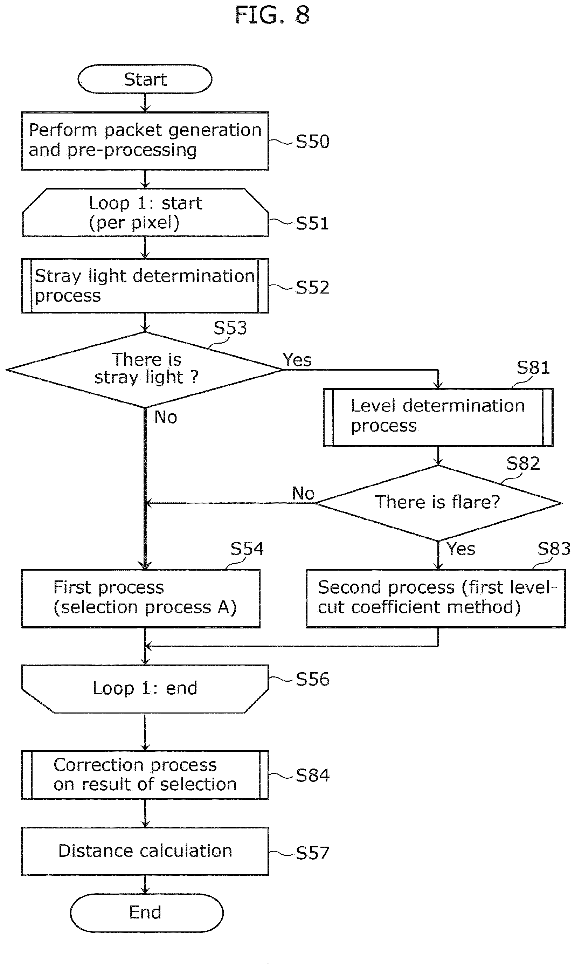

FIG. 8 is a flowchart illustrating an example of an operation performed by a distance measuring device according to Embodiment 2.
[FIG. 9]

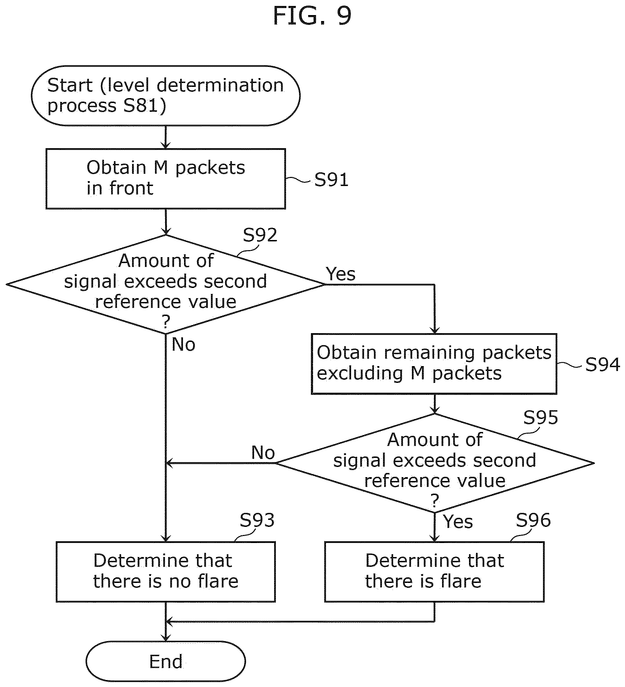

FIG. 9 is a flowchart illustrating one example of a flare determination process in FIG. 8.
[FIG. 10A]

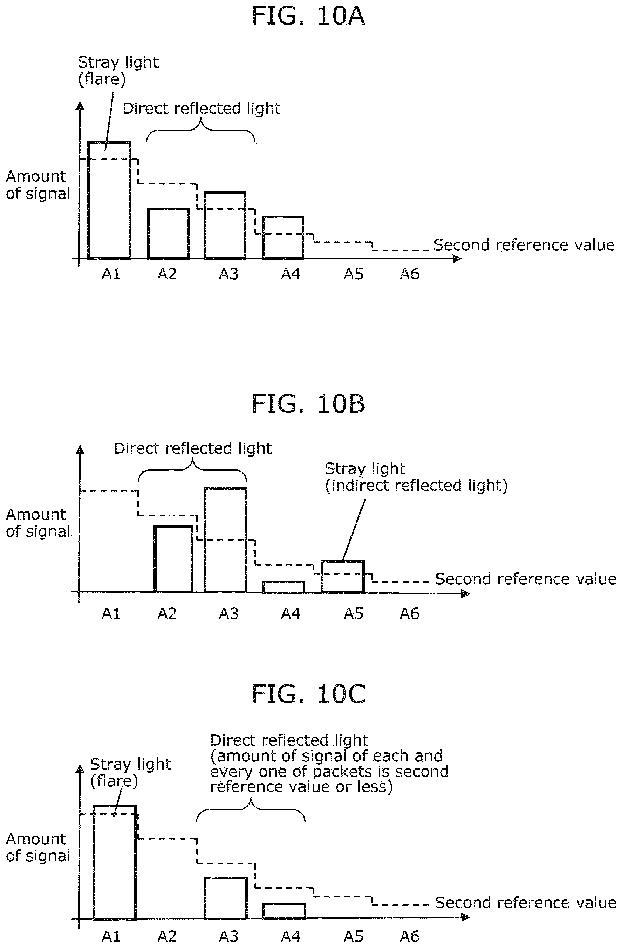

FIG. 10A is a diagram illustrating an example of an amount of signal of a packet when there is a flare.
[FIG. 10B]
FIG. 10B is a diagram illustrating an example of an amount of signal of a packet when there is no flare.
[FIG. 10C]
FIG. 10C is a diagram illustrating another example of an amount of signal of a packet when there is no flare.
[FIG. 11]

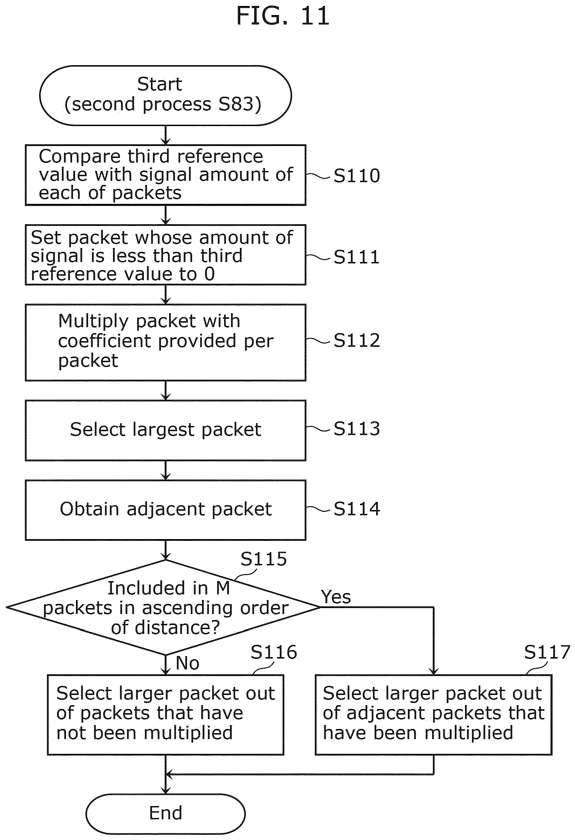

FIG. 11 is a flowchart illustrating one example of a second process in FIG. 8.
[FIG. 12]

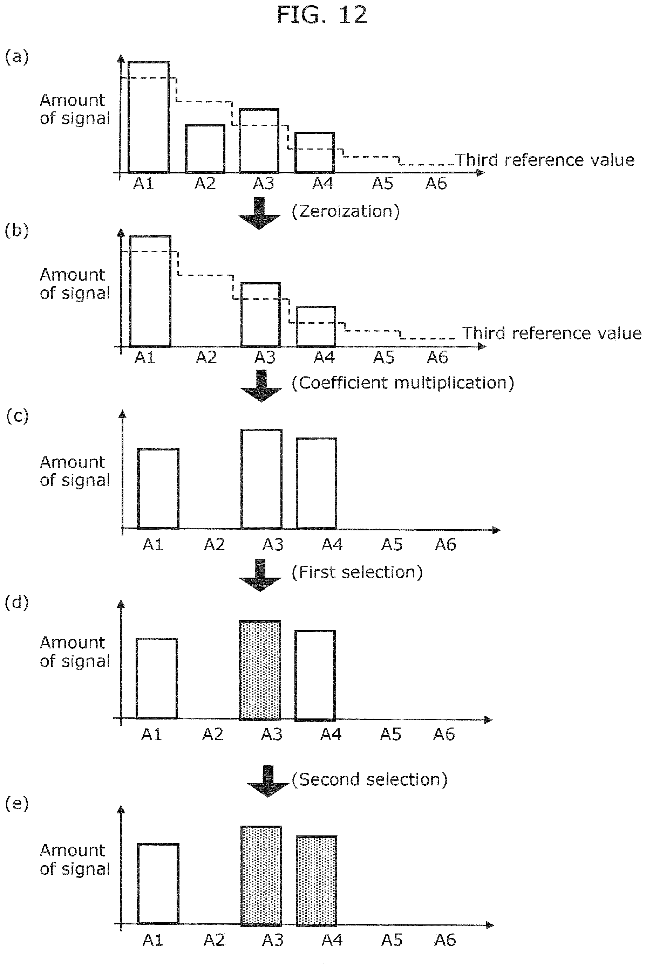

FIG. 12 is an illustration schematically showing one example of a packet to which the second process in FIG. 11 is applied.
[FIG. 13]

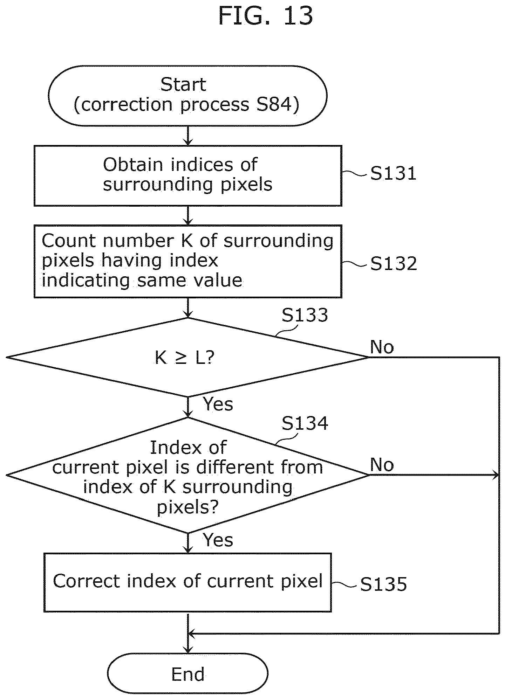

FIG. 13 is a flowchart illustrating one example of a correction process in FIG. 8.
[FIG. 14A]

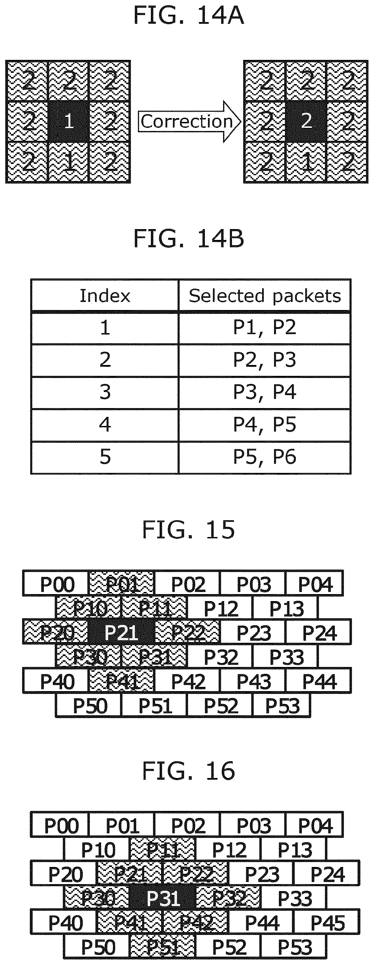

FIG. 14A is an illustration schematically showing the correction process in FIG. 8.
[FIG. 14B]
FIG. 14B is an illustration of indices corresponding to the result of selection in FIG. 8.
[FIG. 15]
FIG. 15 is an illustration showing a current pixel and the surrounding pixels which are to be used in the correction process in FIG. 8.
[FIG. 16]
FIG. 16 is an illustration showing a current pixel and the surrounding pixels which are to be used in the correction process in FIG. 8.
[FIG. 17]

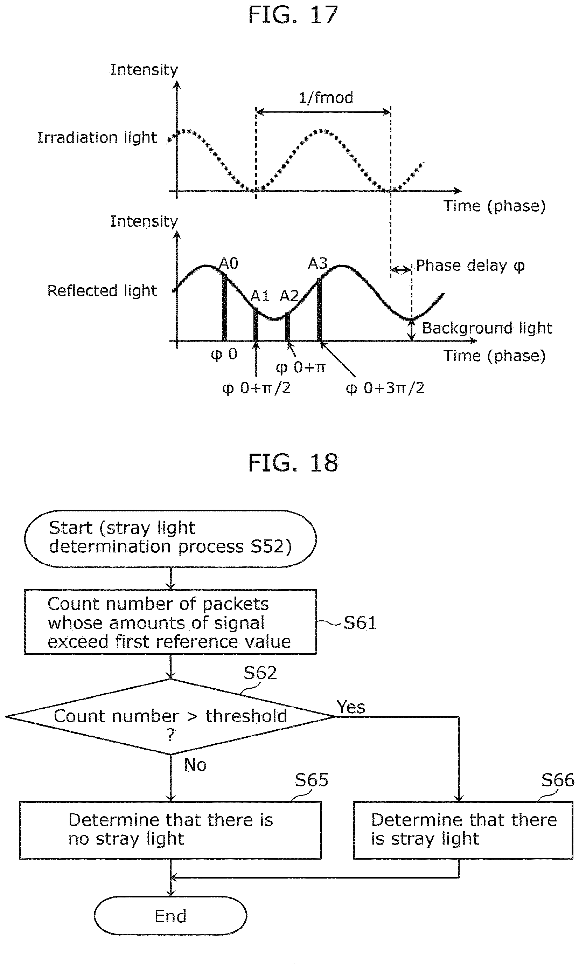

FIG. 17 is an illustration showing an example of irradiation light and an example of packets generated from a single pixel in a distance measuring device according to Embodiment 3.
[FIG. 18]
FIG. 18 is a flowchart illustrating one example of a stray light determination process according to Embodiment 3.
[FIG. 19]

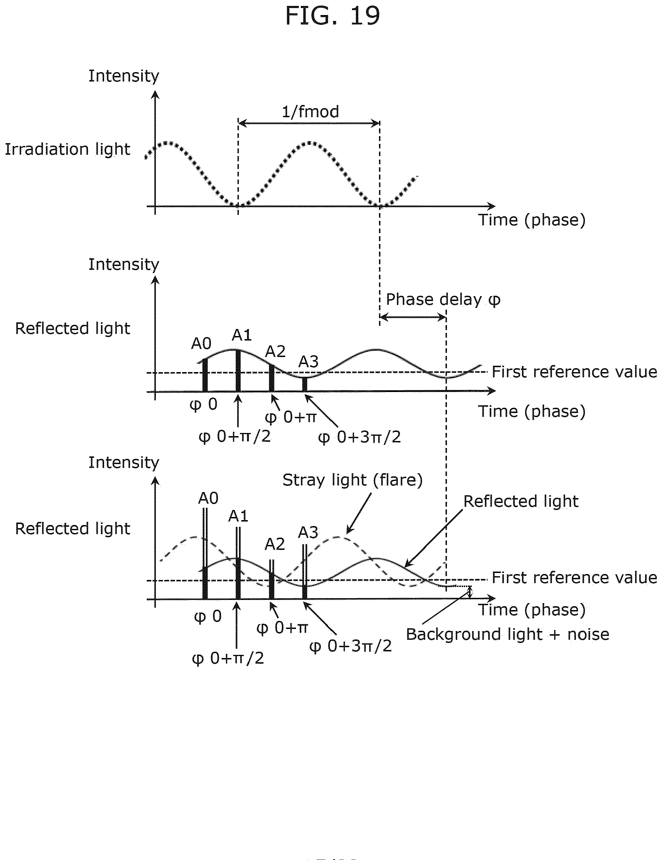

FIG. 19 is an illustration of the stray light determination process according to Embodiment 3.
[FIG. 20]

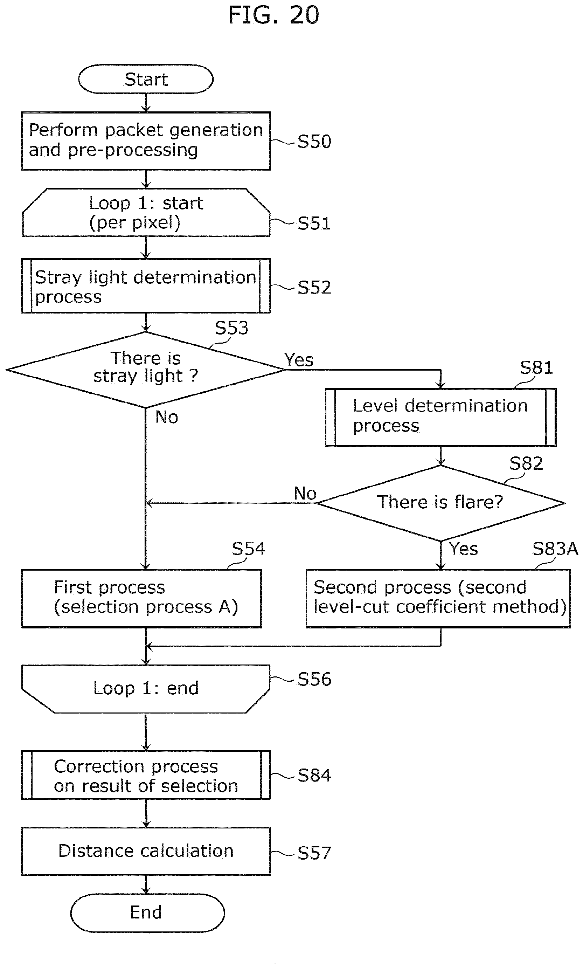

FIG. 20 is a flowchart illustrating an example of an operation performed by a distance measuring device according to Embodiment 4.

[FIG. 21]

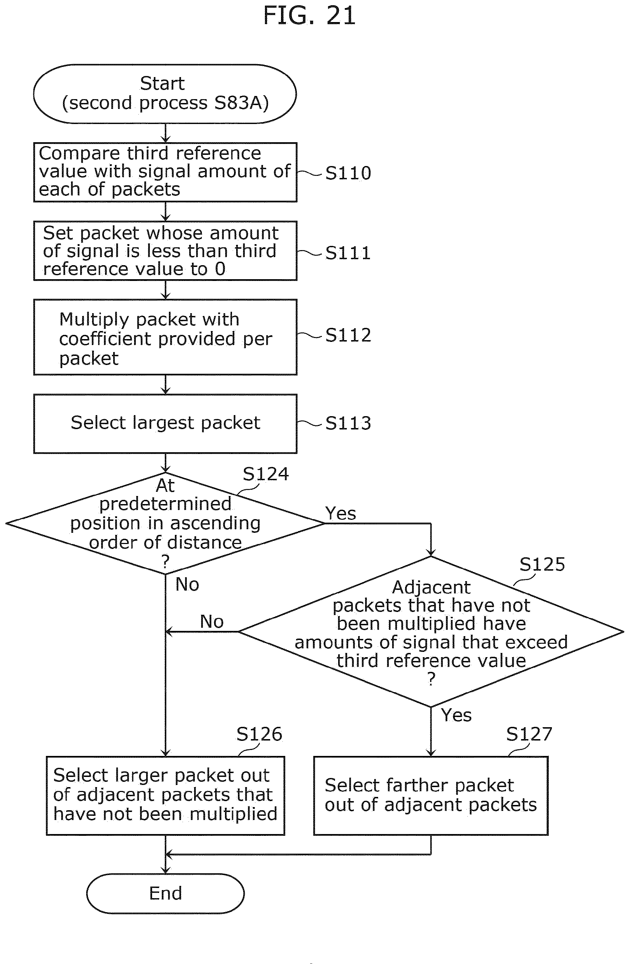

FIG. 21 is a flowchart illustrating one example of a second process in FIG. 20.

[FIG. 22]

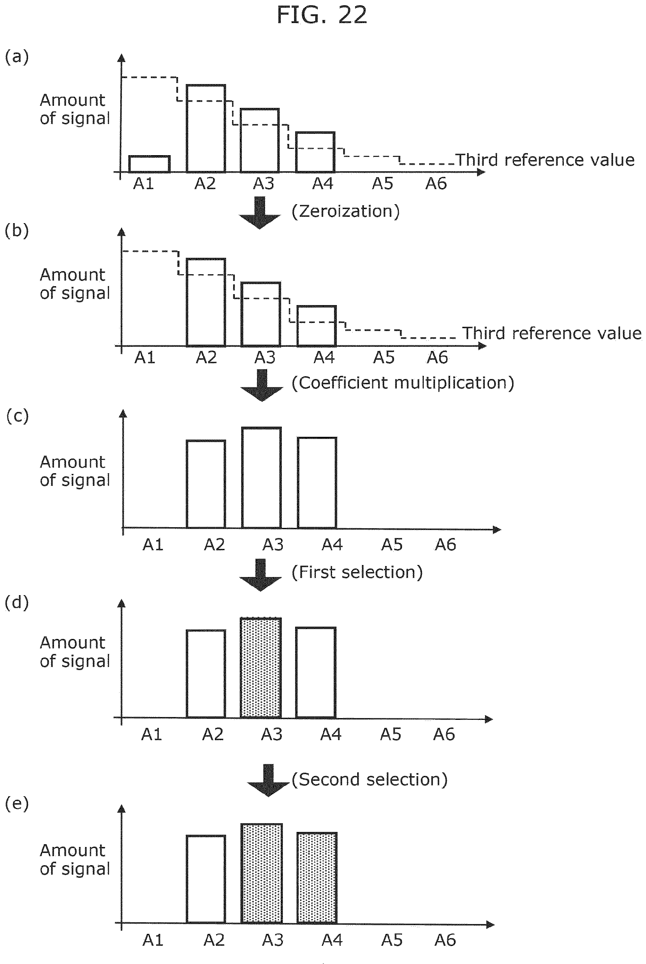

FIG. 22 is an illustration schematically showing one example of a packet to which the second process in FIG. 20 is applied.

[FIG. 23]

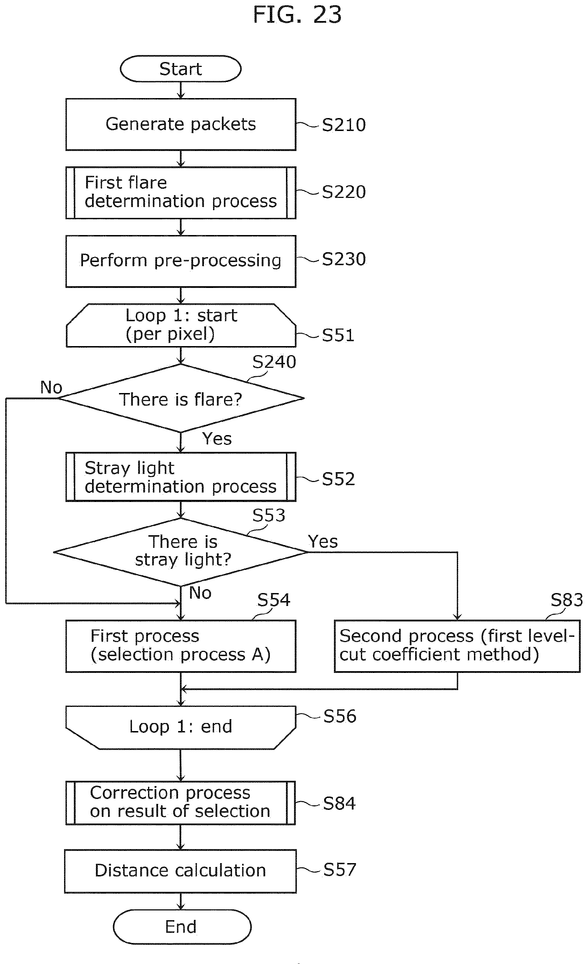

FIG. 23 is a flowchart illustrating an example of an operation performed by a distance measuring device according to Embodiment 5.

[FIG. 24]

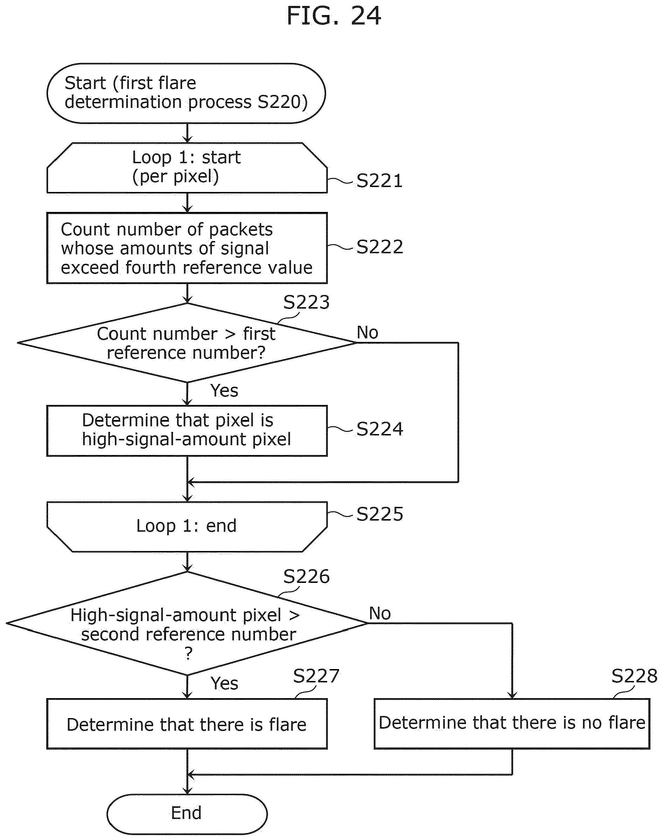

FIG. 24 is a flowchart illustrating one example of a first flare determination process in FIG. 23.

[FIG. 25]

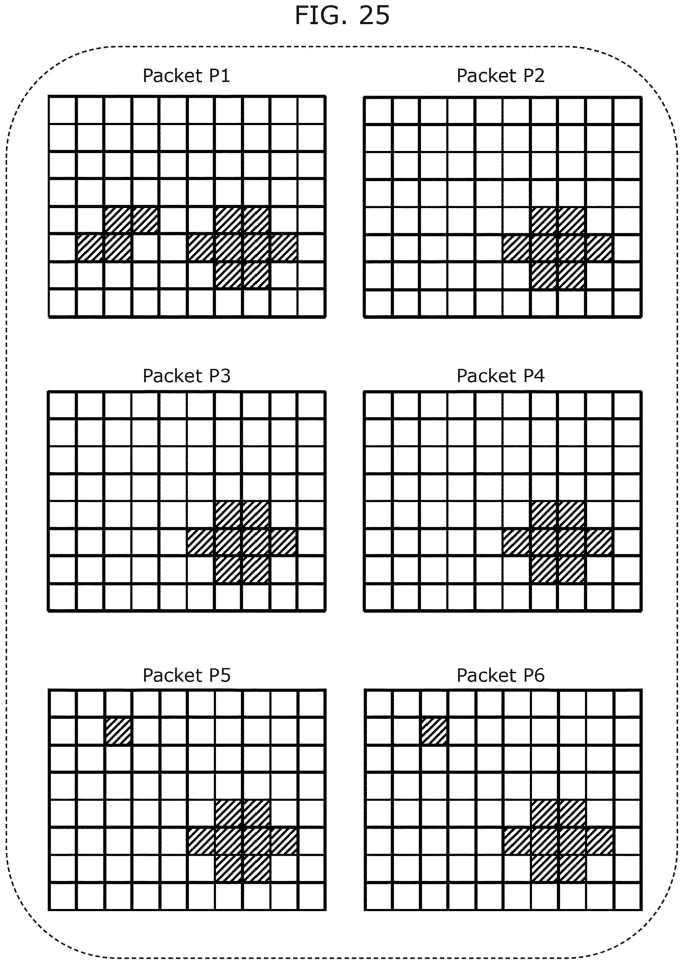

FIG. 25 is a diagram for illustrating one example of the specific operation of the first flare determination process in FIG. 23.

[FIG. 26]

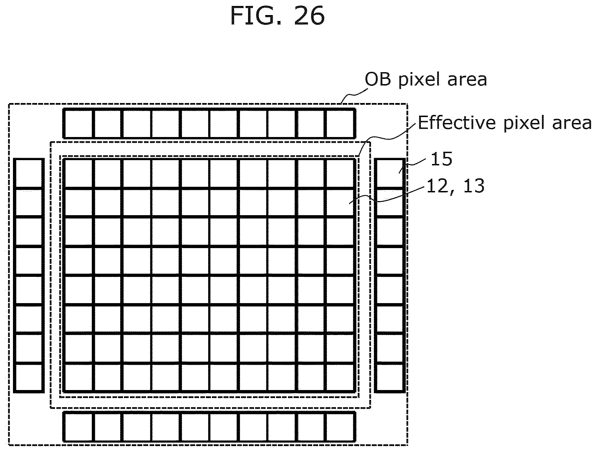

FIG. 26 is a plan view schematically showing how a solid-state imaging device according to Embodiment 6 includes OB pixels.

[FIG. 27]

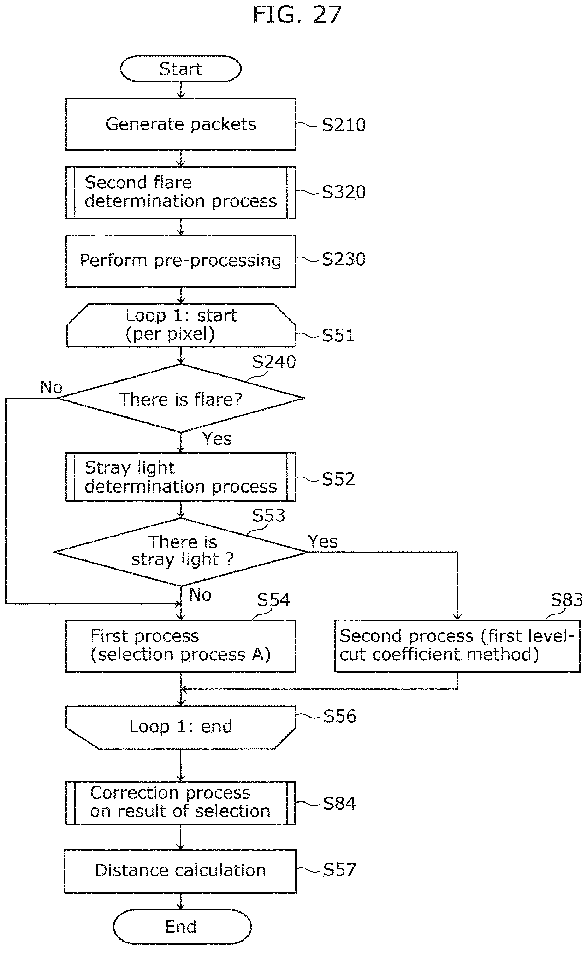

FIG. 27 is a flowchart illustrating an example of an operation performed by a distance measuring device according to Embodiment 6.

[FIG. 28]

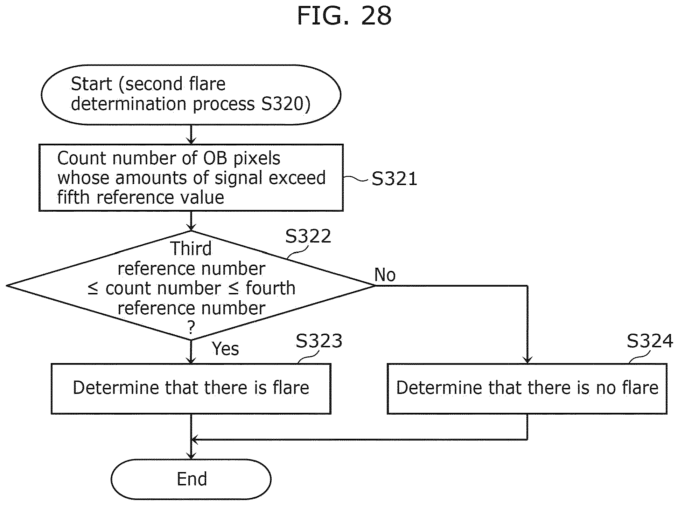

FIG. 28 is a flowchart illustrating one example of a second flare determination process in FIG. 27.

[FIG. 29A]

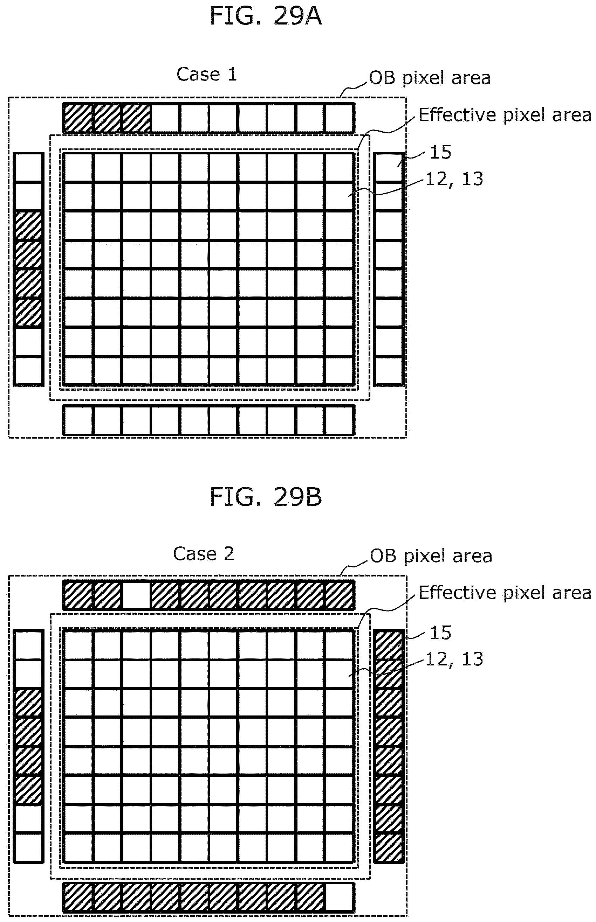

FIG. 29A is a diagram for illustrating one example of the specific operation of a second flare determination process in FIG. 28.

[FIG. 29B]

FIG. 29B is a diagram for illustrating one example of the specific operation of the second flare determination process in FIG. 28.

[FIG. 30]

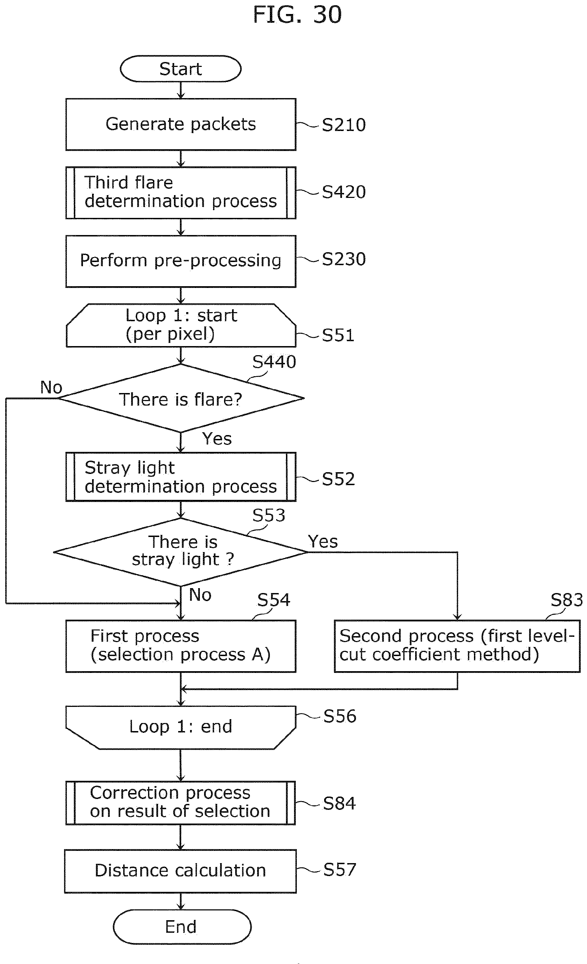

FIG. 30 is a flowchart illustrating an example of an operation performed by a distance measuring device according to Embodiment 7.

[FIG. 31]

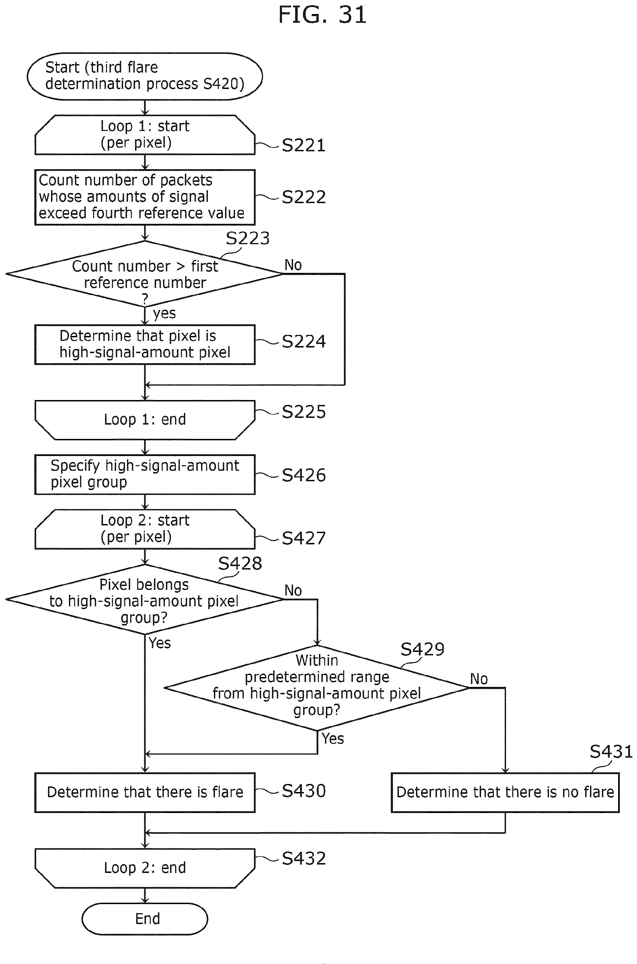

FIG. 31 is a flowchart illustrating one example of a third flare determination process in FIG. 30.

[FIG. 32A]

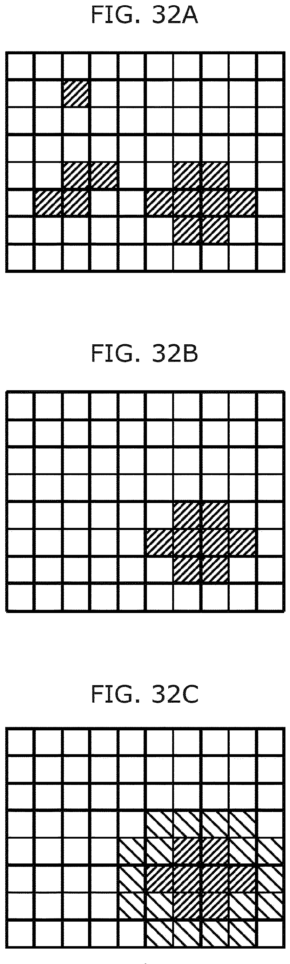

FIG. 32A is a diagram for illustrating one example of the specific operation of the third flare determination process in FIG. 30.

[FIG. 32B]

FIG. 32B is a diagram for illustrating one example of the specific operation of the third flare determination process in FIG. 30.

[FIG. 32C]

FIG. 32C is a diagram for illustrating one example of the specific operation of the third flare determination process in FIG. 30.

[FIG. 33]

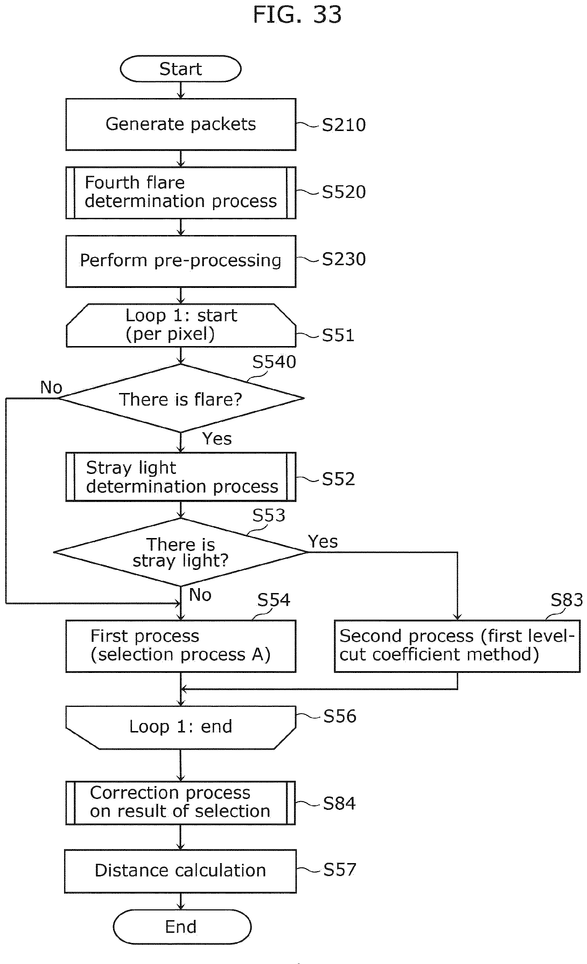

FIG. 33 is a flowchart illustrating an example of an operation performed by a distance measuring device according to Embodiment 8.

[FIG. 34]

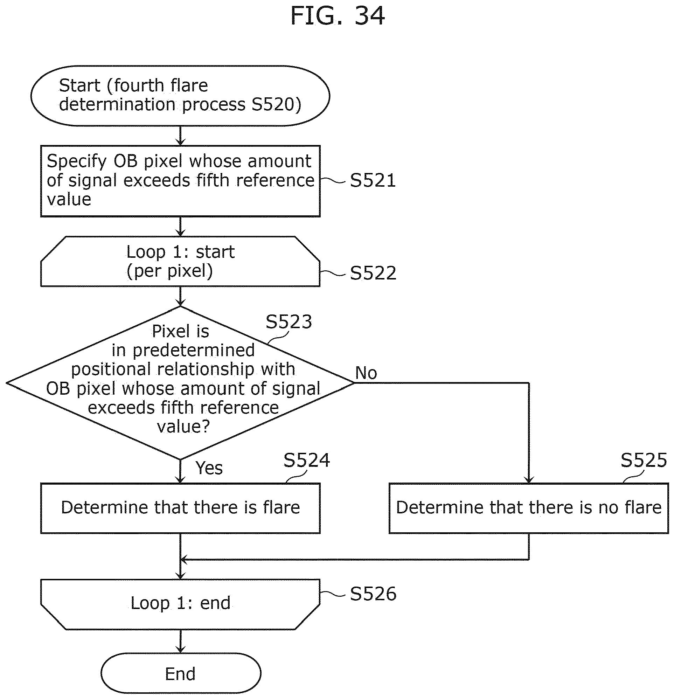

FIG. 34 is a flowchart illustrating one example of a fourth flare determination process in FIG. 33.

[FIG. 35]

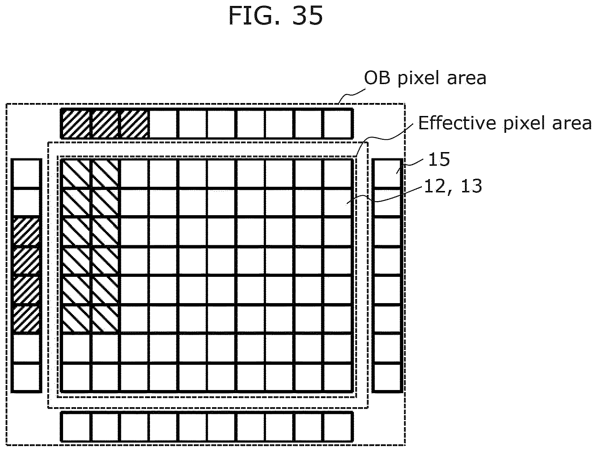

FIG. 35 is a diagram for illustrating one example of the specific operation of the fourth flare determination process in FIG. 33.

[FIG. 36]

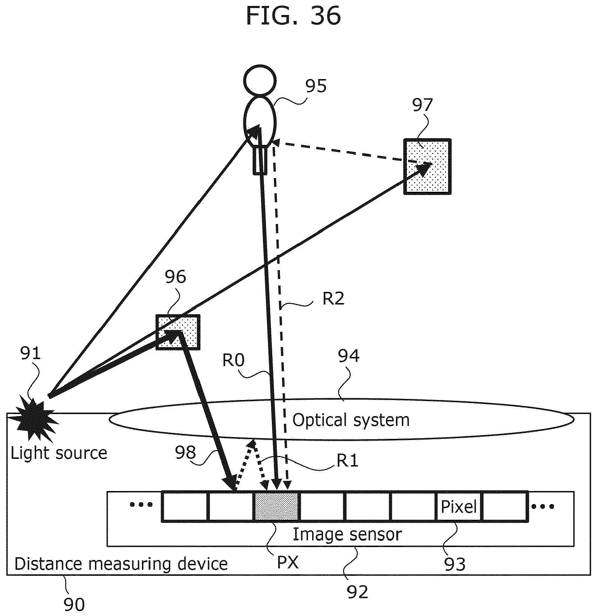

FIG. 36 is a schematic diagram for explaining stray light with respect to a distance measuring device.

[Description of Embodiments]

(Underlying Knowledge Forming Basis of the Present Disclosure)

The inventors have found that a problem related to a distance measuring device, which is the influence of stray light mentioned in the "Background Art" section, occurs.

FIG. 36 is a schematic diagram for explaining stray light with respect to a distance measuring device. The diagram schematically illustrates distance measuring device 90, as well as irradiation light and reflected light among subject 95, object 96, and object 97.

Distance measuring device 90 includes light source 91, image sensor 92, and optical system 94. Light source 91 emits irradiation light to subject 95. Image sensor 92 includes pixels 93. Optical system 94 includes one or more lenses and guides, to image sensor 92, reflected light from an object reflecting irradiation light. The dark grey pixel among pixels 93 is target pixel PX for explaining stray light.

The solid lines in FIG. 36 indicate irradiation light and direct reflected light from light source 91. In FIG. 36, dashed lines indicate indirect reflected light that forms a multipath, and dotted lines indicate stray light generated by reflection at the light-receiving surface of image sensor 92 and reflection at the lens surface of optical system 94.

In the example in FIG. 36, target pixel PX receives direct reflected light R0 from subject 95, stray light R1 from object 96, and indirect reflected light R2 from object 97.

Direct reflected light R0 is light that is reflected by subject 95 reflecting irradiation light from light source 91 and directly reaches distance measuring device 90.

Stray light R1 is incident light that causes a flare, and strong direct reflected light 98 repeats reflection between the surface of image sensor 92 and the surface of the lens and enters target pixel PX. Stray light R1 occurs in the following case. When object 96 is in the close range of distance measuring device 90 and the reflectance of object 96 is high, strong direct reflected light 98 enters distance measuring device 90 from object 96. Strong direct reflected light 98 is reflected between the surface of image sensor 92 and the surface of the lens, and reaches target pixel PX. When optical system 94 includes a plurality of lenses, reflection between the lenses may also occur. Stray light R1 causes a virtual image referred to as a flare in a luminance image, and causes an error in a distance value in a depth image.

Indirect reflected light R2 is incident light generated by reflections of two or more times. Indirect reflected light R2 is light reflected by object 97 reflecting irradiation light from light source 91, and reflected also by subject 95 to enter target pixel PX. Indirect reflected light R2 is prone to be generated when the reflectance of object 97 is high. Indirect reflected light R2 and direct reflected light R0 form a multipath (a multiple propagation path). Indirect reflected light R2 causes a virtual image referred to as a ghost in a luminance image and causes an error in a distance value in a depth image.

Thus, not only direct reflected light R0 but also stray light R1 and indirect reflected light R2 enter target pixel PX as stray light. As a result, due to the influence of the stray light, an error may occur in the distance value of target pixel PX which is calculated by image sensor 92.

To overcome such problems as described above, a distance measuring device according to one aspect of the present disclosure includes a light source that emits irradiation light; a solid-state imaging device that generates, for each of pixels, a plurality of packets that hold signal charges generated at different exposure timings for the irradiation light; and a signal processing circuit that calculates a distance value based on the plurality of packets. For each of the pixels, the signal processing circuit: determines presence or absence of stray light using the plurality of packets corresponding to the pixel; when it is determined that there is no stray light, calculates a distance value of the pixel using a first process; and when it is determined that there is stray light, calculates a distance value of the pixel using a second process different from the first process.

This can reduce the influence of stray light.

A distance measurement method according to one aspect of the present disclosure uses a solid-state imaging device and a light source that emits irradiation light, and includes the following to be executed for each of pixels: generating a plurality of packets that hold signal charges generated at different exposure timings for the irradiation light; determining presence or absence of stray light using the plurality of packets corresponding to the pixel; when it is determined that there is no stray light, calculating a distance value of the pixel using a first process; and when it is determined that there is stray light, calculating a distance value of the pixel using a second process different from the first process.

Note that these general or specific aspects may be achieved by a system, a method, an integrated circuit, a computer program, a computer-readable recording medium such as a CD-ROM, or any combination thereof.

Hereinafter, embodiments of a distance measuring device and a distance measurement method according to one aspect of the present disclosure will be described with reference to the drawings.

The embodiments to be described below are each a general or specific example of the present disclosure. The numerical values, shapes, materials, elements, arrangement and connection of the elements, steps, orders of steps, etc. described in the following embodiments are merely examples, and do not intend to limit the present disclosure. Among elements described in the following embodiments, those not recited in any one of the independent claims that indicate the broadest concepts are described as optional elements.

[Embodiment 1]

1.1 Configuration

FIG. 1 is a block diagram illustrating an example of the configuration of distance measuring device 1 according to Embodiment 1 of the present disclosure. In FIG. 1, distance measuring device 1 includes light source 2, optical system 3, solid-state imaging device 4, control circuit 5, and signal processing circuit 6.

Light source 2 emits, in accordance with an emission control signal from control circuit 5, irradiation light to a subject on which distance measurement is to be performed. The irradiation light is infrared light and is, for example, pulsed light or a continuous wave whose amplitude changes. In the present embodiment, irradiation light is described as being pulsed light.

Optical system 3 includes one or more lenses and guides reflected light from a subject to the light-receiving surface of solid-state imaging device 4.

Solid-state imaging device 4 includes pixels that are two-dimensionally arranged. FIG. 2 is a block diagram illustrating an example of the configuration of distance measuring device 1 in FIG. 1. Solid-state imaging device 4 in FIG. 2 is a charge coupled device (CCD) solid-state imaging device and includes pixels 12, pixels 13, and vertical charge coupled devices (VCCDs) 14.

Pixels 12 and pixels 13 are arranged in a matrix.

Pixels 12, which are for the generation of a depth image, have sensitivity mainly to infrared light and generate signal charges in accordance with the amount of infrared light that has entered pixels 12. A depth image is an image having pixel values each indicating a distance. FIG. 2 illustrates an example in which pixels 12 denoted by "IR" are arranged in odd-numbered rows. Each of pixels 12 generates plural types of signal charges corresponding to different exposure timings for irradiation light. Signal charges are held as packets formed by VCCDs 14.

Pixels 13, which are for the generation of a black-and-white image, have sensitivity mainly to visible light and generate signal charges in accordance with the amount of visible light that has entered pixels 13. A black-and-white image is an image having pixel values each indicating luminance. Pixels 13 are denoted by "W" in FIG. 2 and are arranged in even-numbered rows. Each of pixels 13 generates signal charges in accordance with the amount of visible light that has entered pixel 13.

VCCDs 14, which are provided in number that is same as the number of columns, hold, as packets, signal charges generated by pixels 12 and transfer the signal charges in a vertical direction. For this reason, each of VCCDs 14 is covered by vertical transfer electrodes of plural types. In FIG. 2, each VCCD 14 is covered by vertical transfer electrodes V1 through V10 of ten types. The packets are potential wells formed in VCCDs 14 using the ten types of vertical transfer control voltages applied to vertical transfer electrodes V1 through V10. Vertical transfer electrodes V1 through V10 function as transfer electrodes for packet formation and packet transfer. In addition to the function as a transfer electrode, vertical transfer electrode V4 among transfer electrodes V1 through V10 also has a function as a read-out electrode for reading out signal charges from one pixel 12 to VCCD 14. The packet transfer in the vertical direction of VCCD 14 (i.e., the longitudinal direction of VCCD 14) can be performed bi-directionally. FIG. 3 is an illustration showing an example of plural types of packets formed during a distance measurement operation. FIG. 3 illustrates an example in which six packets P1 through P6 are generated per pixel 12. In FIG. 2 and FIG. 3, pixels 13 for a black-and-white image may be omitted. FIG. 2 and FIG. 3 each illustrate an example in which VCCD 14 is configured to simultaneously read out and mix signal charges from two pixels 12 sandwiching that VCCD 14, but VCCD 14 may be configured not to mix the signal charges. Solid-state imaging device 4 needs to be capable of generating, per pixel 12, packets whose exposure timings are different, and may be a CCD or MOS solid-state imaging device.

Control circuit 5 controls light emission of light source 2 and light exposure of solid-state imaging device 4, using emission control signals and exposure control signals. With this control, solid-state imaging device 4 generates, per pixel 12, packets holding signal charges generated at different exposure timings for irradiation light. FIG. 4A illustrates a specific example of a light-exposure operation that is for generating packets per pixel 12 and uses an emission control signal and exposure control signals. FIG. 4A is a time chart illustrating an example of the operation of generating packets P1 through P6 illustrated in FIG. 3.

"L0" in FIG. 4A denotes the emission pulse included in an emission control signal output from control circuit 5 to light source 2. An emission pulse is a positive logic and instructs emission at high level and non-emission at low level. In other words, light source 2 emits light during the high-level period of emission pulse L0 and turns the light off during the low-level period of emission pulse L0.

"E1" denotes the exposure pulse included in an exposure control signal output from control circuit 5 to solid-state imaging device 4. Exposure pulse E1 is a negative logic and instructs exposure at low level and non-exposure at high level. The pulse width of exposure pulse E1 is the same as that of emission pulse L0. The pulse width of exposure pulse E1 may be different from the pulse width of emission pulse L0. Exposure pulses "E2" through "E6" are each the same as exposure pulse E1. However, exposure pulses E1 through E6 instruct the respective exposures at mutually different timings for emission pulse L0.

FIG. 4A illustrates six types of different exposure operations all in a single time chart for the sake of convenience. The six types of exposure operations are an exposure operation by the pair (L0, E1) of emission pulse L0 and exposure pulse E1, an exposure operation by the pair (L0, E2), an exposure operation by the pair (L0, E3), an exposure operation by the pair (L0, E4), an exposure operation by the pair (L0, E5), and an exposure operation by the pair (L0, E6), and are performed separately in practice.

Control circuit 5 causes light source 2 and solid-state imaging device 4 to perform these six types of exposure operations. As a result, a signal charge generated by the exposure operation by the pair (L0, E1) is transferred to packet P1, as illustrated in FIG. 3. Likewise, signal charges generated by the exposure operations by the pairs (L0, E2), (L0, E3), (L0, E4), (L0, E5), and (L0, E6) are transferred to packets P2, P3, P4, P5, and P6, respectively.

The time difference between emission pulse L0 and an exposure pulse in FIG. 4A increases in the descending order of the exposure operations by the pairs (L0, E1), (L0, E2), (L0, E3), (L0, E4), (L0, E5), and (L0, E6). Stated differently, exposure pulses E1 through E6 correspond to six distance zones obtained by dividing the distance range of distance measuring device 1.

Signal processing circuit 6 determines the presence or absence of stray light using packets corresponding to a single pixel 12. When determining that there is no stray light, signal processing circuit 6 calculates a distance value of that pixel 12 using a first process. When determining that there is stray light, signal processing circuit 6 calculates a distance value of that pixel 12 using a second process different from the first process. In the example in FIG. 4A: one example of timing at which pixel 12 may receive direct reflected light R0 from an object is shown in the grey area; and one example of timing at which pixel 12 may receive stray light R1 that causes a flare is shown in the cross-hatched area. In FIG. 4B, one example of timing at which pixel 12 may receive indirect reflected light R2 that forms a multipath is shown in the cross-hatched area. Signal processing circuit 6 determines the presence or absence of stray light that is either or both of stray light R1 and indirect reflected light R2. The second process in signal processing circuit 6 may be, for example, disabling of pixel 12, i.e., setting the distance value of pixel 12 to an invalid value. Since this can exclude inaccurate distance values including errors due to stray light, the influence of stray light can be reduced. As another example of the second process, a distance value may be calculated after excluding packets corresponding to stray light. With this, since a distance value is calculated while reducing errors due to stray light, the influence of stray light can be reduced.

1.2 Operation

Next, an example of an operation performed by distance measuring device 1 according to the present embodiment will be described.

FIG. 5 is a flowchart illustrating an example of an operation performed by distance measuring device 1 according to Embodiment 1. FIG. 5 is a flowchart illustrating a distance measurement method according to the present disclosure.

In FIG. 5, distance measuring device 1 firstly performs packet generation and pre-processing (S50). For example, distance measuring device 1 performs, for one or more times, the six types of exposure operations illustrated in FIG. 4A to generate packets P1 through P6. Moreover, signal processing circuit 6 subtracts, from the amounts of signal of packets P1 through P6, the amount of signal indicating the amount of background light.

Subsequently, signal processing circuit 6 performs processes (S51 through S56) in loop 1 for each of pixels 12.

In loop 1, signal processing circuit 6 performs a stray light determination process on current pixel 12 (S52). The stray light determination process is a process of determining the presence or absence of stray light using packets P1 through P6 generated from current pixel 12.

When determining that there is no stray light (no in S53), signal processing circuit 6 performs a first process (S54). When determining that there is stray light (yes in S53), signal processing circuit 6 performs a second process different from the first process (S55). The first process is a process of selecting a packet resulting from exposing direct reflected light from a subject from among packets P1 through P6. This process is referred to as selection process A. In selection process A, a packet with the largest amount of signal is selected as a first packet among packets P1 through P6 and a second packet is selected from among packets adjacent to the first packet in terms of distance. The expression "adjacent in terms of distance" means that two distance zones corresponding to two packets are adjacent to each other. When the amount of signal of stray light R1 or indirect reflected light R2 is sufficiently small in the example in FIG. 4A or FIG. 4B, or when there is no stray light, two packets of P3 and P4 resulting from exposing direct reflected light R0 are selected in selection process A. Moreover, pixel 12 for which it is determined that there is stray light is set as an invalid pixel in the second process.

After loop 1 is performed on all of pixels 12, signal processing circuit 6 performs distance calculation for each of pixels 12 to calculate distance value z (S57). However, in the distance calculation in step S57, signal processing circuit 6 sets an invalid value as the distance value of pixel 12 that has been set as an invalid pixel in step S55.

Distance value z is calculated, for example, using Expression 1 that uses the amounts of signal of two packets selected in the first process in step S54.

[Math. 1]

$$z = (c \cdot i \cdot Tp + c \cdot \frac{S1 - BG1}{S0 - BG0 + S1 - BG1} \cdot Tp)/2 \qquad \text{Expression 1}$$

In Expression 1, c is a constant number indicating the speed of light. i denotes the number of a packet with a smaller time difference from the emission timing of the irradiation light ("3" of 3 in FIG. 4A), out of the two packets selected in step S54. Stated differently, i denotes a packet number corresponding to a closer distance zone from distance measuring device 1 ("3" of 3 in FIG. 4A) out of two distance zones corresponding to the two packets selected in step S54. Tp is the pulse width of pulsed light and is also the pulse width of an exposure pulse. S0 denotes the amount of signal of a packet, out of the selected two packets, with a smaller time difference from the emission timing of the irradiation light. S1 denotes the amount of signal of a packet, out of the selected two packets, with a larger time difference from the emission timing of the irradiation light. BG0 denotes the background light component of the packet, out of the two selected packets, with the smaller time difference from the emission timing of the irradiation light. BG1 denotes the background light component of the packet, out of the two selected packets, with the larger time difference from the emission timing of the irradiation light.

Since pixel 12 for which it is determined that there is stray light is thus disabled, the influence of stray light can be reduced.

1.2.1 Stray light determination

Next, a detailed example of the stray light determination process in step S53 in FIG. 5 will be described.

FIG. 6 is a flowchart illustrating one example of the stray light determination process performed per pixel 12 in FIG. 5. FIG. 7A and FIG. 7D are each an illustration showing an example of the amount of signal of a packet when there is no stray light. FIG. 7B and FIG. 7C are each an illustration showing an example of the amount of signal of a packet when there is stray light. In FIG. 7A through FIG. 7D, A1 denotes an amount of signal after the pre-processing of packet P1 in FIG. 4A or FIG. 4B, i.e., an amount of signal resulting from removing a background light component. The same applies to A2 through A6. Amounts of signal A1 through A6 correspond to packets P1 through P6 in the ascending order of the time difference from the emission timing of the irradiation light, i.e., in the ascending order of the distance between distance measuring device 1 and a reflecting object.

In FIG. 6, first, signal processing circuit 6 compares a first reference value with the amount of signal of each of packets corresponding to current pixel 12, and counts the number of packets whose amounts of signal exceed the first reference value (S61). The first reference value may be, for example, a value resulting from adding background light and a noise component that may be generated in the environment of distance measuring device 1. The first reference value may be a value determined in advance or a value dynamically determined based on actual measurement.

When the counted number exceeds threshold N1, signal processing circuit 6 determines that there is stray light (S62). Threshold N1 is a number that depends on the number of packets to be used in the calculation of distance value z, and N1 = 2 may be applied in the case of Expression 1. According to step S62, it is determined that there is stray light in the example in FIG. 7B.

Signal processing circuit 6 also selects top N2 packet signals in the descending order of amount of signal among packet signals corresponding to current pixel 12 (N2 is an integer of two or greater, and FIG. 6 illustrates an example where N2 is 2) (S63), and determines whether the exposure timings of the selected N2 packets are in a predetermined adjacency relationship (S64). When the exposure timings are not in the predetermined adjacency relationship (no in S64), signal processing circuit 6 determines that there is stray light (S66). When the exposure timings are in the predetermined adjacency relationship (yes in S64), signal processing circuit 6 determines that there is no stray light (S65). A predetermined adjacency relationship means that two distance zones corresponding to two exposure pulses are adjacent to each other. According to step S64, it is determined that there is stray light in the example in FIG. 7C. It is determined that there is no stray light in the example in FIG. 7A or FIG. 7D.

According to FIG. 6, it is possible to determine, per pixel 12, the presence or absence of stray light such as indirect reflected light and stray light.

When it is determined that there is stray light in step S52 in FIG. 5, distance measuring device 1 may warn the higher-level system of distance measuring device 1 or the user of distance measuring device 1 that there is stray light.

As described above, distance measuring device 1 according to Embodiment 1 includes: a light source that emits irradiation light; a solid-state imaging device that generates, for each of pixels, a plurality of packets that hold signal charges generated at different exposure timings for the irradiation light; and a signal processing circuit that calculates a distance value based on the plurality of packets. For each of the pixels, the signal processing circuit: determines presence or absence of stray light using the plurality of packets corresponding to the pixel; when it is determined that there is no stray light, calculates a distance value of the pixel using a first process; and when it is determined that there is stray light, calculates a distance value of the pixel using a second process different from the first process.

With this, since a first process or a second process is selectively performed in accordance with a determination result indicating the presence or absence of stray light, the influence of stray light can be reduced. In addition, it is possible to determine the presence or absence of stray light such as stray light that causes a flare and indirect reflected light in a multipath.

For each of the pixels, the signal processing circuit may: compare a first reference value with the amount of signal of each of the plurality of packets corresponding to the pixel; count a total number of packets whose amounts of signal exceed the first reference value; and when the counted total number exceeds a threshold, determine that there is stray light

According to this, the presence or absence of stray light can be determined per pixel by threshold-based judgment and comparison between a first reference value and the amount of signal of each of packets.

For each of the pixels, the signal processing circuit may: select top N packets in descending order of amount of signal among the plurality of packets corresponding to the pixel, where N is an integer of two or greater; determine whether exposure timings of the selected top N packets are in a predetermined adjacency relationship; and when the exposure timings are not in the predetermined adjacency relationship, determine that there is stray light

According to this, the presence or absence of stray light can be determined per pixel based on the amounts of signal of packets and the adjacency relationship of top N packets.

The irradiation light may be pulsed light. The signal processing circuit may: compare a first reference value with the amount of signal of each of the plurality of packets corresponding to a single pixel; count a total number of packets that exceed the first reference value; when the counted total number exceeds a threshold, determine that there is stray light; select top N packets in descending order of amount of signal among the plurality of packets, where N is an integer of two or greater; determine whether exposure timings of the selected top N packets are in a predetermined adjacency relationship; and when the exposure timings are not in the predetermined adjacency relationship, determine that there is stray light.

According to this, the presence or absence of stray light can be determined per pixel based on comparison between a first reference value and the amount of signal of each of packets, threshold-based judgment, and the adjacency relationship of top N packets.

The threshold may be determined according to the total number of packets to be used in the calculation of the distance value among the plurality of packets.

According to this, it is possible to determine an appropriate threshold in accordance with the number of packets to be used in distance value calculation.

The threshold may be two and the N may be two

According to this, the distance measuring device according to the present disclosure is suitable for, for example, a distance measuring device that calculates a distance value based on the ratio between two packets.

The signal processing circuit may disable the pixel in the second process

According to this, when it is determined that there is stray light, the influence of stray light can be reduced by disabling a pixel for which it is determined that there is stray light.

A distance measurement method according to Embodiment 1 uses a solid-state imaging device and a light source that emits irradiation light, and includes the following to be executed for each of pixels: generating a plurality of packets that hold signal charges generated at different exposure timings for the irradiation light; determining presence or absence of stray light using the plurality of packets corresponding to the pixel; when it is determined that there is no stray light, calculating a distance value of the pixel using a first process; and when it is determined that there is stray light, calculating a distance value of the pixel using a second process different from the first process.

According to the distance measurement method described above, since a first process or a second process is selectively performed in accordance with a determination result indicating the presence or absence of stray light, the influence of stray light can be reduced. In addition, it is possible to determine the presence or absence of stray light such as stray light that causes a flare and indirect reflected light in a multipath.

[Embodiment 2]

Embodiment 1 has described an example of disabling pixel 12 for which it is determined that there is stray light. Embodiment 2 will describe an example of the configuration of a distance measuring device that does not disable pixel 12 for which it is determined that there is stray light, and calculates a distance value after excluding packets corresponding to stray light.

The configuration of distance measuring device 1 according to Embodiment 2 may be the same as in FIG. 1 through FIG. 3. However, a process performed by signal processing circuit 6 according to Embodiment 2 is partly different from the process performed by signal processing circuit 6 according to Embodiment 1. The following focuses on the difference, avoiding overlapping descriptions.

2.1 Operation of distance measuring device

FIG. 8 is a flowchart illustrating an example of an operation performed by a distance measuring device according to Embodiment 2. The flowchart in FIG. 8 is different from the flowchart in FIG. 5 in that new steps S81, S82, and S84 are added and step S83 instead of step S55 is included.

When it is determined that there is stray light in step S53, signal processing circuit 6 performs also a level determination process (S81). The level determination process is a process for determining the presence or absence of a flare, i.e., the presence or absence of stray light that causes a flare. When it is determined that there is no flare (no in S82) as a result of the level determination process, signal processing circuit 6 performs a first process (S54). When it is determined that there is a flare (yes in S82), signal processing circuit 6 performs a second process (S83). The second process in step S83 is the process of excluding packets corresponding to stray light and selecting a packet to be used for distance calculation, instead of disabling pixel 12. This second process is referred to as a first level-cut coefficient method.

After the completion of loop 1, signal processing circuit 6 performs a correction process on the result of the packet selection in the second process in step S83 (S84). After the correction process, signal processing circuit 6 calculates, per pixel 12, a distance value by distance calculation. In the distance calculation in step S57, since there is no invalid pixel 12, distance calculation is performed for all of pixels 12.

2.2 Level determination process

Next, a detailed example of the level determination process in step S81 in FIG. 8 will be described.

FIG. 9 is a flowchart illustrating one example of the level determination process in FIG. 8. FIG. 10A and FIG. 10C are each a diagram illustrating an example of the amount of signal of a packet when a flare occurs. FIG. 10B is a diagram illustrating an example of the amount of signal of a packet when no flare occurs.

In FIG. 9, signal processing circuit 6 obtains M packets, in front, of pixel 12 for which it is determined that there is stray light in step S53 (S91). The M packets in front are M packets corresponding to M distance zones in the ascending order of distance from distance measuring device 1. M denotes the number of packets, among all of packets, which correspond to distance zones which are close to distance measuring device 1 and in which a flare may occur, and depends on, for instance, the depth of a distance measurement range, the length of a distance zone corresponding to a packet, and the intensity of light from light source 2. In Embodiment 1, if a flare is likely to occur in two distance zones close to distance measuring device 1 among six packets, M = 2 may be applied. Alternatively, when a flare is likely to occur in one distance zone that is closest to distance measuring device 1, M = 1 may be applied. The description is provided assuming M = 1.

Signal processing circuit 6 also compares a second reference value with each of the obtained M packets (S92). The second reference value indicates an amount of signal that a flare may occur, and is, for example, individually set per packet, as indicated by the dotted lines in FIG. 10A through FIG. 10C. The second reference value may be a value common to the M packets. The second reference value is described as being individually set per packet so that a larger value is set for a distance zone closer to distance measuring device 1, as indicated by the dotted lines in FIG. 10A through FIG. 10C.

When the amount of signal of each of the M packets does not exceed the second reference value (no in S92), signal processing circuit 6 determines that there is no stray light that causes a flare (S93). When the amount of signal of at least one of the M packets exceeds the second reference value (yes in S92), signal processing circuit 6 predicts that a flare may occur and proceeds to step S94.

In step S94, signal processing circuit 6 obtains the remaining packets excluding the M packets in front (S94). When the amount of signal of any of the remaining packets does not exceed the second reference value (no in S95), signal processing circuit 6 determines that there is no flare (S93). When at least one of the remaining packets exceeds the second reference value (yes in S95), signal processing circuit 6 determines that there is a flare (S96).

According to the level determination process in FIG. 9, in the example in FIG. 10A, it is determined that there is a flare and the second process is applied. In the example in FIG. 10B or FIG. 10C, it is determined that there is no flare and the first process is applied. In the example in FIG. 10C, although there is actually a flare, it is intentionally determined that there is no flare in step S95. Since the amount of signal of each and every one of packets corresponding to direct reflected light is less than the second reference value and can be ignored, the amount of signal is excluded from the second process (the first level-cut coefficient method). In the example in FIG. 10C, the distance value of the corresponding pixel 12 may be set to an invalid value.

Thus, owing to the level determination process, the presence or absence of stray light that causes a flare can be surely determined.

Next, the second process that uses the first level-cut coefficient method in step S83 in FIG. 8 will be described.

FIG. 11 is a flowchart illustrating one example of the second process that uses the first level-cut coefficient method in FIG. 8. FIG. 12 is an illustration schematically showing an example of packets to which the second process in FIG. 11 is applied. Here, the description is provided assuming M = 2.

In FIG. 11, signal processing circuit 6 compares a third reference value with the amount of signal of each of packets corresponding to a current pixel (S110), and sets the amount of signal of a packet, among the packets, whose amount of signal is below the third reference value to 0 (S111). The third reference value indicates an amount of signal that may be generated due to a flare or multipath, and may be a value individually set per packet, as indicated by the dotted lines in (a) and (b) in FIG. 12, or a value common to all of packets. The third reference value may be the same as the second reference value in each of FIG. 10A through FIG. 10C. Here, the description is provided assuming that the third reference value is the same as the second reference value.

In the example in (a) in FIG. 12, the amount of signal of each of packets A2, A5, and A6 is below the third reference value. In this example, the amount of signal of each of packets A2, A5, and A6 is set to 0, as illustrated in (b) in FIG. 12. This makes it possible to exclude a packet including noise that could not be removed in the pre-processing in step S50.

Subsequently, signal processing circuit 6 multiplies, with a coefficient, each of packets whose amounts of signal are not 0 among the packets (S112). The coefficient here is determined so that a packet corresponding to a distance zone that is farther from distance measuring device 1 has a larger value. Stated differently, the coefficient is determined to be a larger value for a packet corresponding to a distance zone with a larger amount of attenuation of irradiation light and a larger amount of attenuation of reflected light. (c) in FIG. 12 illustrates packets that have been multiplied.

Signal processing circuit 6 also selects, as a first packet, the largest packet among the packets each of which has been multiplied with the corresponding coefficient (S113). In (d) in FIG. 12, packet A3 is selected as the first packet.

Signal processing circuit 6 then obtains two packets adjacent to the first packet in terms of distance (S114), and selects, as a second packet, a packet with a larger amount of signal out of the two adjacent packets (S116 or S117). In (e) in FIG. 12, packet A4 is selected as the second packet.

For an amount of signal to be used in the selection of the second packet, either an amount of signal before coefficient multiplication or an amount of signal after coefficient multiplication may be selected in accordance with the situation. In the flowchart in FIG. 11, when the two adjacent packets do not include any of the M packets in front (no in S115), signal processing circuit 6 selects, as the second packet, a packet with a larger amount of signal before coefficient multiplication (S116). When the two adjacent packets include the M packets in front (yes in S115), signal processing circuit 6 selects, as the second packet, a packet with a larger amount of signal after coefficient multiplication (S117).

According to the second process that uses the first level-cut coefficient method in FIG. 11, since a packet that includes stray light is excluded and a first packet and a second packet that are to be used for distance calculation are selected, the influence of stray light can be reduced. In addition, since a difference in an amount of attenuation per distance zone corresponding to packets is converted to an equivalent amount of attenuation through coefficient multiplication, the amounts of signal of packets in different distance zones can be compared directly. Moreover, since either an amount of signal before coefficient multiplication or an amount of signal after coefficient multiplication is selected in accordance with the situation for use in the selection of the second packet, two packets to be used for distance calculation can be appropriately selected.

### 2.3 Correction process

Next, a detailed example of the correction process in step S84 in FIG. 8 will be described.

FIG. 13 is a flowchart illustrating one example of the correction process in FIG. 8. FIG. 14A is an illustration schematically showing the correction process in FIG. 8. FIG. 14B is an illustration of indices corresponding to the results of selections in the first process and the second process.

FIG. 13 illustrates a correction process performed per pixel 12 on which the second process has been performed. This correction process is not to be applied to pixel 12 on which the first process has been performed.

First, signal processing circuit 6 obtains the indices of surrounding pixels with a current pixel at the center on which the correction process is to be performed (S131). FIG. 14A illustrates nine pixels 12. Black pixel 12 at the center is the current pixel on which the second process has been performed. Eight grey pixels 12 around the current pixel are the surrounding pixels. The numerical value of each of pixels 12 indicates an index. As illustrated in FIG. 14B, an index takes a value in the range of 1 to 5 and indicates two packets that are selected in the first process and the second process and are to be used for distance calculation. In this example, index 1 indicates that packets P1 and P2 are selected for distance calculation. Likewise, index 2 indicates packets P2 and P3. Each of indices 3 to 5 also indicates two packets, as illustrated in FIG. 14B.

Next, signal processing circuit 6 counts number K of surrounding pixels each having an index indicating the same value among eight surrounding pixels (S132). K is the number of an index that is counted the most among the eight surrounding pixels. In the example in FIG. 14A, there are seven indices "2" and one index "1" among the eight surrounding pixels. In this case, the count number K of index "2" is 7.

Signal processing circuit 6 also determines whether the count number K is L or greater (S133). L is a fixed constant number and is, for example, 7. L may be 6, 5, or any other number.

When determining that K is not L or greater, signal processing circuit 6 ends the correction process. When determining that K is L or greater, signal processing circuit 6 determines whether the index of the current pixel is different from the index of the K surrounding pixels (S134). When determining that the index of the current pixel is not different from the index of the K surrounding pixels (no in S134), signal processing circuit 6 ends the correction process. When determining that the index of the current pixel is different from the index of the K surrounding pixels (yes in S134), signal processing circuit 6 corrects the index of the current pixel to a value that is same as the index of the K surrounding pixels (S135). In the example in FIG. 14A, the index "1" of the current pixel is corrected to a value "2" that is same as the index of the K surrounding pixels.

Thus, in the correction process in FIG. 13, when the surrounding pixels each have an index indicating the same value that is at least a given number L, the index of the current pixel is corrected to a value that is same as the index of the surrounding pixels. Thus, when an inappropriate result is generated in the stray light determination process, the level determination process, or the second process, the inappropriate result can be corrected to a more appropriate result through the correction process.

The correction process in FIG. 13 may be applied also to pixel 12 on which the first process has been performed.

Surrounding pixels in the correction process in FIG. 13 are not limited to the example in FIG. 14A and the example in FIG. 15 or FIG. 16 may be applied. In FIG. 15, black pixel P21 is a current pixel on which the correction process is to be performed. A group of eight pixels P01, P10, P11, P20, P22, P30, P31, and P41 around pixel P21 that is the current pixel indicates the surrounding pixels. In FIG. 16, black pixel P31 is a current pixel on which the correction process is to be performed. A group of eight pixels P11, P21, P22, P30, P32, P41, P42, and P51 around pixel P31 that is the current pixel indicates the surrounding pixels. In FIG. 15 or FIG. 16, even when a pixel other than pixel P21 or P31 is the current pixel, the relative position of the surrounding pixels is same as when pixel P21 or P31 is the current pixel.

Each of pixels in FIG. 15 and FIG. 16 corresponds to the position of the center of gravity of two pixels 12 obtained by mixing signal charges in FIG. 2 with signal charges in FIG. 3.

As described above, in distance measuring device 1 according to Embodiment 2, the signal processing circuit: compares a second reference value with each of M packets corresponding to M distance zones in ascending order of distance from the distance measuring device among the plurality of packets; and determines that there is stray light when at least one of the M packets exceeds the second reference value.

According to this, the presence or absence of stray light that causes a flare can be surely determined.

The signal processing circuit may: compare a second reference value with each of the plurality of packets; and determine that there is stray light (i) when at least one of top M packets corresponding to M distance zones in ascending order of distance from the distance measuring device among the plurality of packets exceeds the second reference value, and (ii) when at least one of packets excluding the top M packets among the plurality of packets exceeds the second reference value.

According to this, the presence or absence of stray light that causes a flare can be surely determined.

The second reference value may be determined for each of the plurality of packets

According to this, accuracy in determining the presence or absence of stray light can be enhanced.

In the second process, the signal processing circuit may: compare a third reference value with each of the plurality of packets; change the amount of signal of a packet whose amount of signal is less than the third reference value among the plurality of packets to 0; multiply each of packets whose amounts of signal are not 0 among the plurality of packets with a coefficient having a larger value in descending order of distance from the distance measuring device; select, as a first packet, the largest packet among the packets that have been multiplied; select, as a second packet, a larger packet out of packets adjacent to the first packet in terms of distance; and calculate a distance value from the first packet and the second packet.

According to this, the influence of stray light can be more surely reduced.

In the second process, the signal processing circuit may: determine whether at least one of the packets adjacent to the first packet in terms of distance is included in N packets in ascending order of distance from the distance measuring device; when it is determined that the at least one of the packets is included in the N packets, select, as a second packet, a larger packet out of the packets that are adjacent to the first packet in terms of distance and have been multiplied; and when it is determined that the at least one of the packets is not included in the N packets, select, as a second packet, a larger packet out of the packets that are adjacent to the first packet in terms of distance and have not been multiplied.

According to this, the influence of stray light can be more surely reduced.

For each of the pixels, the signal processing circuit may: select, from among the plurality of packets, at least two packets for use in the calculation of the distance value in the first process and the second process; and correct a result of the selection of the at least two packets selected in the second process, based on a result of selecting a surrounding pixel of the pixel.

According to this, when a selection result in the second process is inappropriate, the selection result can be corrected to an appropriate selection result.

[Embodiment 3]

Embodiment 3 will describe distance measuring device 1 that uses a CW indirect TOF method. The CW indirect TOF method uses, as irradiation light, a continuous wave (CW) instead of pulsed light.

The configuration of distance measuring device 1 according to Embodiment 3 may be the same as in FIG. 1 through FIG. 3. Main differences, however, are the following points: irradiation light of light source 2 is a continuous wave instead of pulsed light; and packets corresponding to different timings use the phase of a continuous wave as a reference. The following focuses on the differences.

3.1 Operation of distance measuring device

FIG. 17 is an illustration showing an example of irradiation light and an example of packets generated from a single pixel 12 in a distance measuring device according to Embodiment 3.

The upper stage in FIG. 17 illustrates irradiation light of light source 2. This irradiation light is a continuous wave having an amplitude that changes periodically. Specifically, the irradiation light is a sine wave whose amplitude (i.e., brightness) changes between the smallest value and the largest value. The smallest value may be 0. The frequency of the sine wave is fmod. One period of the sine wave is 1/fmod.

The lower stage in FIG. 17 illustrates an example of the waveform of reflected light received by solid-state imaging device 4. In this example, the reflected light has a time difference that is phase delay $\varphi$ relative to the irradiation light. Solid-state imaging device 4 generates, per pixel 12, four packets A0 through A3 having different exposure timings. The exposure timing of packet A0 is the timing of phase difference $\varphi0$ relative to the irradiation light. The exposure timing of packet A1 is the timing of phase difference $(\varphi0 + n / 2)$ relative to the irradiation light. The exposure timing of packet A2 is the timing of phase difference $(\varphi0 + n)$ relative to the irradiation light. The exposure timing of packet A3 is the timing of phase difference $(\varphi0 + 3n / 2)$ relative to the irradiation light.

Signal processing circuit 6 calculates, per pixel 12, phase delay $\varphi$ using Expression 2 that uses the four packets A0 through A3, and calculates, per pixel 12, distance value z using Expression 3.

[Math. 2]

$$\phi = \tan^{-1} \frac{A3\text{-}A1}{A0\text{-}A2} \qquad \text{Expression 2}$$

[Math. 3]

$$Z = \frac{\phi}{2\pi} \cdot \frac{c}{2\,\text{fmod}} \qquad \text{Expression 3}$$

The operation of distance measuring device 1 according to Embodiment 3 may be the same as in FIG. 5. However, the processes in steps S50, S52, S54, and S57 are different. The following focuses on the difference.

In step S50, control circuit 5 causes light source 2 to emit the irradiation light illustrated in FIG. 17, and at the same time, causes solid-state imaging device 4 to generate packets A0 through A3 at the exposure timings of $\varphi0$, $(\varphi0 + n / 2)$, $(\varphi0 + n)$, and $(\varphi0 + 3n / 2)$.

In step S52, signal processing circuit 6 performs, for example, a stray light determination process illustrated in FIG. 18. FIG. 19 is an illustration of the stray light determination process in FIG. 18.

The stray light determination process in FIG. 18 is different from the stray light determination process in FIG. 6 in regard to the removal of steps S63 and S64 as well as to the first reference value and the threshold.

The first reference value may be determined based on the waveform of a sine wave and the sum of the amount of background light and the amount of noise so that at least one of four packets A0 through A3 does not exceed the first reference value.

The threshold depends on the number of packets to be used for distance calculation and may be three in FIG. 18. In other words, the threshold is used for the determination of whether each and every one of the four packets A0 through A3 has exceeded the first reference value.

The upper stage in FIG. 19 illustrates the sine wave of the irradiation light. The middle stage in FIG. 19 illustrates reflected light when there is no stray light. In this case, at least one of the four packets A0 through A3 does not exceed the first reference value. The lower stage in FIG. 19 illustrates reflected light when there is stray light. In FIG. 19, the black thick lines each indicate reflected light and the double lines each indicate the sum of the reflected light and stray light. The amount of signal of each of packets A0 through A3 is the sum of reflected light and stray light. In this case, since each and every one of the four packets A0 through A3 exceeds the first reference value, it is determined that there is stray light.

Thus, in the stray light determination process in FIG. 18, distance measuring device 1 that uses the CW indirect TOF method can determine the presence or absence of stray light.

As described above, in distance measuring device 1 according to Embodiment 3, the irradiation light may be a continuous wave having an amplitude that changes periodically and the threshold may be three.

According to this, it is possible, with a distance measuring device that uses continuous waves, to reduce the influence of stray light by disabling a pixel for which it is determined that there is stray light.

[Embodiment 4]

Embodiment 4 will describe distance measuring device 1 according to Embodiment 4 resulting from modifying part of the operation performed by distance measuring device 1 according to Embodiment 2.

Distance measuring device 1 according to Embodiment 4 has the same configuration as distance measuring device 1 according to Embodiment 2. However, some of processes performed by signal processing circuit 6 according to Embodiment 4 are different from the processes performed by signal processing circuit 6 according to Embodiment 2. The following focuses on the difference, avoiding overlapping descriptions.

FIG. 20 is a flowchart illustrating an example of an operation performed by distance measuring device 1 according to Embodiment 4. The flowchart in FIG. 20 is different from the flowchart in FIG. 8 in that the process in step S83 is changed to a process in step S83A. In other words, distance measuring device 1 according to Embodiment 2 performs a second process that uses the first level-cut coefficient method whereas distance measuring device 1 according to Embodiment 4 performs a second process that uses a second level-cut coefficient method.

FIG. 21 is a flowchart illustrating one example of the second process that uses the second level-cut coefficient method in FIG. 20. FIG. 22 is an illustration schematically showing an example of packets to which the second process in FIG. 21 is applied.

The flowchart in FIG. 21 is different from the flowchart in FIG. 11 in that the processes from step S114 to step S117 are changed to processes from step S124 to step S127.

In FIG. 21, signal processing circuit 6 compares a third reference value with the amount of signal of each of packets corresponding to a current pixel (S110), and sets the amount of signal of a packet, among the packets, whose amount of signal is below the third reference value to 0 (S111).

In the example in (a) in FIG. 22, the amount of signal of each of packets A1, A5, and A6 is below the third reference value. In this example, the amount of signal of each of packets A1, A5, and A6 is set to 0, as illustrated in (b) in FIG. 22. This makes it possible to exclude a packet including noise that could not be removed in the pre-processing in step S50.

Subsequently, signal processing circuit 6 multiplies, with a coefficient, each of packets whose amounts of signal are not 0 among the packets (S112). The coefficient here is determined per packet so that a larger value is set for the coefficient of a packet corresponding to a distance zone farther from distance measuring device 1. Stated differently, the coefficient is determined to have a large value for a packet corresponding to a distance zone in which the amount of attenuation of irradiation light and the amount of attenuation of reflected light are large. (c) in FIG. 22 illustrates packets that have been multiplied.

Signal processing circuit 6 also selects, as a first packet, the largest packet among the packets that have been multiplied with the coefficient (S113). In (d) in FIG. 22, packet A3 is selected as the first packet.

Signal processing circuit 6 then determines whether the first packet is placed at a predetermined position in the ascending order of distance from distance measuring device 1 (S124). Here, the (M + 1)-th (i.e., the third because of M = 2 in the example here) in the ascending order of distance from distance measuring device 1 corresponds to the predetermined position. In other words, signal processing circuit 6 determines whether the first packet is a packet in a distance zone immediately adjacent to distance zones corresponding to a range in which a flare may occur and immediately adjacent to a distance zone that is farther from distance measuring device 1 out of the distance zones.

In the process in step S124, when the first packet is placed at the predetermined position in ascending order of distance from distance measuring device 1 (yes in S124), signal processing circuit 6 determines whether the amounts of signal of both packets that are adjacent to the first packet in terms of distance and have not been multiplied exceed the third reference value (S125).

In the process in step S125, when the amounts of signal of both packets that are adjacent to the first packet in terms of distance and have not been multiplied exceed the third reference value (yes in S125), i.e., when the amounts of signal, before multiplication, of both packets adjacent to the first packet in terms of distance exceed the third reference value, signal processing circuit 6 selects, as a second packet, a packet that is farther from distance measuring device 1 out of the packets adjacent to the first packet in terms of distance (S127). In (e) in FIG. 22, packet A4 is selected as the second packet.

When the first packet is not placed at the predetermined position in ascending order from distance measuring device 1 in the process in step S124 (no in S124) and at least one of the packets that are adjacent to the first packet in terms of distance and have not been multiplied does not exceed the third reference value in the process in step S125 (no in S125), signal processing circuit 6 selects, as the second packet, the larger one of the packets that have not been multiplied out of the packets adjacent to the first packet in terms of distance, i.e., a packet with a larger amount of signal, which has not been multiplied with a coefficient, out of the packets adjacent to the first packet in terms of distance (S126).

In the second process that uses the second level-cut coefficient method in FIG. 21, when the amount of signal, before multiplication, of a packet that is closer to distance measuring device 1 by one packet than a packet in a distance zone placed at a predetermined position (the (M + 1)-th in the ascending order of distance from distance measuring device 1) exceeds the third reference value, the packet whose amount of signal exceeds the third reference value is very likely to be a packet that a flare is occurring.

According to the second process that uses the second level-cut coefficient method in FIG. 21, when the packet placed at the predetermined position is selected as the first packet and the amounts of signal of both packets that are adjacent to the first packet in terms of distance and have not been multiplied exceed the third reference value, the packet that is farther from distance measuring device 1 out of the adjacent packets is selected as the second packet and the packet that is closer to distance measuring device 1, i.e., the packet that is very likely that a flare is occurring is not selected as the second packet. For this reason, two packets to be used for distance calculation can be appropriately selected.

As described above, in distance measuring device 1 according to Embodiment 4, in the second process, the signal processing circuit: compares a third reference value with each of the plurality of packets; changes an amount of signal of a packet whose amount of signal is less than the third reference value among the plurality of packets to 0; multiplies each of packets whose amounts of signal are not 0 among the plurality of packets with a coefficient having a larger value in descending order of distance from the distance measuring device; selects, as a first packet, the largest packet among the packets that have been multiplied; determines whether the first packet is placed at a predetermined position in ascending order of distance from the distance measuring device; when it is determined that the first packet is placed at the predetermined position in the ascending order and both packets that are adjacent to the first packet in terms of distance and have not been multiplied exceed the third reference value, selects, as a second packet, a packet that is farther from the distance measuring device out of the packets adjacent to the first packet in terms of distance; and calculates a distance value from the first packet and the second packet.

According to this, the influence of stray light can be more surely reduced.


[Embodiment 5]

Embodiment 5 will describe distance measuring device 1 according to Embodiment 5 resulting from modifying part of the operation performed by distance measuring device 1 according to Embodiment 2.

Distance measuring device 1 according to Embodiment 5 has the same configuration as distance measuring device 1 according to Embodiment 2. However, some of processes performed by signal processing circuit 6 according to Embodiment 5 are different from the processes performed by signal processing circuit 6 according to Embodiment 2. The following focuses on the difference, avoiding overlapping descriptions.

At a stage before the stray light determination process is performed on each of pixels 12, distance measuring device 1 according to Embodiment 5 determines whether a flare is occurring in the area of pixels 12 arranged in a matrix. When determining that a flare is not occurring, distance measuring device 1 does not perform the stray light determination process and performs the first process on each of pixels 12.

FIG. 23 is a flowchart illustrating an example of an operation performed by distance measuring device 1 according to Embodiment 5. The flowchart in FIG. 23 is different from the flowchart in FIG. 8 in the following points: the process in step S50 is divided into a process in step S210 and a process in step S230, and a process in step S220 is added between the process in step S210 and the process in step S230; a process in step S240 is added between the process in step S51 and the process in step S52; and the process in step S81 and the process in step S82 are removed.

In FIG. 23, distance measuring device 1 firstly performs the six types of exposure operations illustrated in FIG. 4A for one or more times and generates packets P1 through P6 (step S210).

When the packets are generated, signal processing circuit 6 performs the first flare determination process of determining whether a flare is occurring in the area of pixels 12 based on the packets of each of pixels 12 (step S220). It is described herein that when determining that a flare is occurring, signal processing circuit 6 sets up a flare determination flag (substitute 1 into a flare determination flag whose initial value is 0).

After the first flare determination process, signal processing circuit 6 performs pre-processing (step S230).

Subsequently, signal processing circuit 6 performs loop 1 (S51 through S56) for each of pixels 12.

In loop 1, signal processing circuit 6 checks whether it has been determined that a flare is occurring in the area of pixels 12 (S240). In other words, signal processing circuit 6 checks whether the flare determination flag indicates 1 or 0.

When it has been determined that a flare is not occurring in the area of pixels 12 (no in S240), i.e., when the flare determination flag indicates 0, signal processing circuit 6 performs the first process on those pixels 12 (S54). When it has been determined that a flare is occurring in the area of pixels 12 (yes in S240), i.e., when the flare determination flag indicates 1, signal processing circuit 6 performs the stray light determination process on those pixels 12 (S52).

When determining that there is no stray light (no in S53), signal processing circuit 6 performs the first process on those pixels 12 (S54). When determining that there is stray light (yes in S53), signal processing circuit 6 performs the second process that uses the first level-cut coefficient method on those pixels 12 (S83).

Next, a detailed example of the first flare determination process in step S220 in FIG. 23 will be described.

FIG. 24 is a flowchart illustrating one example of the first flare determination process in FIG. 23.

FIG. 25 is a diagram for illustrating one example of the specific operation of the first flare determination process, and is a schematic diagram illustrating pixels 12 whose amounts of signal exceed a fourth reference value in each of packets P1 through P6.

It is described herein that the first flare process is performed on all of packets P1 through P6, but the first flare determination process does not necessarily need to be performed on all of the packets and may be performed only on predetermined packets, for example.

In FIG. 25, each of squares arranged in a matrix indicates a different one of pixels 12 arranged in a matrix, and a hatched square indicates pixel 12 whose amount of signal exceeds the fourth reference value.

FIG. 25 illustrates that the amount of signal of pixel 12 located the third from left in a lateral direction (the third column) and the second from top in a longitudinal direction (the second row) (hereinafter also referred to as "pixel 12 (3-2)", the first number in the parentheses indicates a position in the columns of pixels 12 arranged in a matrix, the second number in the parentheses indicates a position in the rows of pixels 12 arranged in a matrix, and the same applies to pixels 12 presented in parentheses in the following description) exceeds the fourth reference value in two packets of packets P5 and P6.

In FIG. 24, signal processing circuit 6 firstly performs processes (S221 through S225) in loop 1 for each of pixels 12.

In loop 1, signal processing circuit 6 firstly compares the fourth reference value with the amount of signal of each of packets corresponding to current pixel 12, and counts the number of packets whose amounts of signal exceed the fourth reference value (S222). The fourth reference value may be a value corresponding to the amount of signal that causes a flare. The fourth reference value may be a value determined in advance or a value dynamically determined based on actual measurement.

When the counted number exceeds a first reference number (yes in S223), signal processing circuit 6 determines that current pixel 12 is a high-signal-amount pixel (S224). The first reference number may be a value determined in advance. In this case, the first reference number may be determined based on the amount of signal of pixel 12 which is obtained by conducting, for instance, experiments and simulations in advance and satisfies a predetermined condition regarding flare occurrence.

When the first reference number is 2, for example, a total of nine pixels 12 that are pixel 12 (3-2), pixel 12 (7-5), pixel 12 (8-5), pixel 12 (6-6), pixel 12 (7-6), pixel 12 (8-6), pixel 12 (9-6), pixel 12 (7-7), and pixel 12 (8-7) are determined as being high-signal-amount pixels in the example in FIG. 25.

In the processes in FIG. 24, when the process in step S224 is ended and the number counted in the process in step S222 does not exceed the first reference number (no in S223), signal processing circuit 6 ends the processes in loop 1 performed on current pixel 12. When loop processes 1 for the next pixel 12 are started or loop processes 1 for all of pixels 12 are completed, signal processing circuit 6 proceeds to a process in step S226 after going through the processes in loop 1.

After the processes in loop 1 for all of pixels 12 are completed, signal processing circuit 6 checks whether the number of high-signal-amount pixels exceeds a second reference number (S226). The second reference number may be a value determined in advance. In this case, the second reference number may be determined based on the number of high-signal-amount pixels counted when a flare is occurring, which is obtained by conducting, for instance, experiments and simulations in advance.

In the process in step S226, when the number of high-signal-amount pixels exceeds the second reference number (yes in S226), signal processing circuit 6 determines that there is a flare (S227), and when the number of high-signal-amount pixels does not exceed the second reference number (no in S226), signal processing circuit 6 determines that there is no flare (S228).

In the example in FIG. 25, for example, when the second reference number is 10, signal processing circuit 6 determines that there is no flare since nine pixels 12 are high-signal-amount pixels, as described above.

As described above, in distance measuring device 1 according to Embodiment 5, the signal processing circuit further: determines presence or absence of a flare; when it is determined that there is a flare, performs the determination of the presence or absence of stray light performed for each of the pixels; and when it is determined that there is no flare, calculates, for each of the pixels, the distance value of the pixel using the first process.

This makes it possible to further reduce the influence of stray light since the first process or the second process is selectively performed for each of the pixels in accordance with the determination on the presence or absence of a flare.

The irradiation light may be pulsed light. In the determination of the presence or absence of a flare, the signal processing circuit may determine that there is a flare when the total number of high-signal-amount pixels exceeds a second reference number, where a high-signal-amount pixel is a pixel whose total number of packets whose amounts of signal exceed a fourth reference value exceeds a first reference number.

According to this, it is possible to determine the presence or absence of a flare by comparing the number of high-signal-amount pixels with the second reference number.

In Embodiment 5, it is described that the number of packets whose amounts of signal exceed the fourth reference value is counted in the process in step S222 in the first flare determination process in FIG. 24. As another method, however, the number of packets that exceed the fourth reference value and are consecutive in a distance zone may be counted.

In general, packets that cause a flare tend to be consecutive in a distance zone. For this reason, it is possible to determine the presence or absence of a flare with more accuracy by counting the number of packets that exceed the fourth reference value and are consecutive in a distance zone.

[Embodiment 6]

Embodiment 6 describes distance measuring device 1 according to Embodiment 6 resulting from modifying part of the configuration of distance measuring device 1 according to Embodiment 5 and part of the operation performed by distance measuring device 1 according to Embodiment 5

The configuration of distance measuring device 1 according to Embodiment 6 results from modifying distance measuring device 1 according to Embodiment 5 so that solid-state imaging device 4 includes optical black pixels 15 (hereinafter "optical black pixel" is also referred to as "OB pixel") in the surrounding area of pixels 12 and pixels 13 arranged in a matrix.

OB pixel 15 has the same pixel structure as pixel 12, but light from outside does not directly enter OB pixel 15 owing to a light shielding film. When a flare occurs, however, light from outside may indirectly enter OB pixel 15. OB pixel 15 is used mainly to extract a dark current component.

FIG. 26 is a plan view schematically showing how solid-state imaging device 4 according to Embodiment 6 includes OB pixels 15 in the surrounding area of pixels 12 and pixels 13 arranged in a matrix.

As illustrated in FIG. 26, solid-state imaging device 4 according to Embodiment 6 includes OB pixels 15 in OB pixel areas surrounding an effective pixel area in which pixels 12 and pixels 13 are arranged in a matrix.

FIG. 26 illustrates the configuration of solid-state imaging device 4 as if there is a space between the effective pixel area and the OB pixel areas. However, the configuration need not be limited to such an example in which there is a space between the effective pixel area and the OB pixel areas, and the configuration may be such that there may not be a space between the effective pixel area and the OB pixel areas.

As described above, in distance measuring device 1 according to Embodiment 6, some of processes performed by signal processing circuit 6 according to Embodiment 6 are different from the processes performed by signal processing circuit 6 according to Embodiment 5. The following focuses on the difference, avoiding overlapping descriptions.

FIG. 27 is a flowchart illustrating an example of an operation performed by distance measuring device 1 according to Embodiment 6. The flowchart in FIG. 27 is different from the flowchart in FIG. 23 in that the process in step S220 is changed to a process in step S320. In other words, distance measuring device 1 according to Embodiment 5 performs the first flare determination process whereas distance measuring device 1 according to Embodiment 6 performs a second flare determination process, to determine whether a flare is occurring in the area of pixels 12 arranged in a matrix.

FIG. 28 is a flowchart illustrating one example of the second flare determination process in FIG. 27.

FIG. 29A and FIG. 29B are each a diagram for illustrating one example of the specific operation of the second flare determination process, and is a schematic diagram illustrating OB pixels 15 whose amounts of signal exceed a fifth reference value in a predetermined packet, which is to be described later.

In each of FIG. 29A and FIG. 29B, in the OB pixel area, each of squares arranged in a straight line indicates a different one of OB pixels 15 arranged in a straight line, and a hatched square indicates OB pixel 15 whose amount of signal exceeds the fifth reference value.

In FIG. 28, signal processing circuit 6 firstly counts the number of OB pixels 15 whose amounts of signal exceed the fifth reference value in a predetermined packet (S321). The predetermined packet may be determined in advance. In this case, the predetermined packet may be determined based on the number of OB pixels 15 which is counted when a flare is occurring in, for instance, experiments and simulations conducted in advance and whose amounts of signal exceed the fifth reference value. The predetermined packet is, for example, packet P1.

The fifth reference value may be a value determined in advance or a value that changes dynamically. In general, the dark current component of OB pixel 15 changes depending on an environment (temperature in particular) in which distance measuring device 1 is used. In this case, the dark current components of specific OB pixels 15 alone do not change, but the dark current components of all of OB pixels 15 change together in the same manner. For this reason, the fifth reference value may change dynamically such that the fifth reference value is reduced in an environment where the dark current component of OB pixel 15 is relatively small and is relatively increased in an environment where the dark current component of OB pixel 15 is relatively large. This makes it possible to determine the presence or absence of a flare with more accuracy.

When the counted number is at least the third reference number and at most the fourth reference number (yes in S322), signal processing circuit 6 determines that there is a flare (S323). When the counted number is less than the third reference number or greater than the fourth reference number (no in S322), signal processing circuit 6 determines that there is no flare (S324).

The third reference number and the fourth reference number may be values determined in advance. The third reference number may be determined based on, for example, the number of OB pixels 15 whose amounts of signal locally increase when a flare occurs. The amounts of signal are obtained by conducting, for instance, experiments and simulations in advance. The fourth reference number may be determined based on how the amounts of signal of OB pixels 15 increase or decrease on the whole, regardless of the fact that a flare is not occurring and due to factors related to an environment in which distance measuring device 1 is used. The amounts of signal are obtained by conducting, for instance, experiments and simulations in advance.

When the third reference number is 5 and the fourth reference number is 30, for example, signal processing circuit 6 determines that there is a flare since the number of OB pixels 15 whose amounts of signal exceed the fifth reference value is 7 in the example in case 1 in FIG. 29A. In contrast, signal processing circuit 6 determines that there is no flare since the number of OB pixels 15 whose amounts of signal exceed the fifth reference value is 30 in the example in case 2 in FIG. 29B.

As described above, in distance measuring device 1 according to Embodiment 6, the signal processing circuit further: determines presence or absence of a flare; when it is determined that there is a flare, performs the determination of the presence or absence of stray light performed for each of the pixels; and when it is determined that there is no flare, calculates, for each of the pixels, the distance value of the pixel using the first process.

This makes it possible to further reduce the influence of stray light since the first process or second process is selectively performed for each of pixels in accordance with the determination of the presence or absence of a flare.

The irradiation light may be pulsed light. In the determination of the presence or absence of a flare, the signal processing circuit may determine that there is a flare when the total number of optical black pixels is at least a third reference number and at most a fourth reference number greater than the third reference number, where an optical black pixel is a pixel whose amount of signal exceeds a fifth reference value in a predetermined packet.

According to this, the presence or absence of a flare can be determined based on the number of optical black pixels whose amounts of signal exceed the fifth reference value in a predetermined packet.

The fifth reference value may change dynamically.

According to this, it is possible to determine the presence or absence of a flare with more accuracy.

[Embodiment 7]

Embodiment 7 describes distance measuring device 1 according to Embodiment 7 resulting from modifying part of the operation performed by distance measuring device 1 according o Embodiment 5.

At a stage before the stray light determination process is performed on each of pixels 12, distance measuring device 1 according to Embodiment 5 determines whether a flare is occurring (determines the presence or absence of a flare) in the area of pixels 12 arranged in a matrix, whereas distance measuring device 1 according to Embodiment 7 determines, for each of pixels 12, whether a flare is occurring.

Distance measuring device 1 according to Embodiment 7 has the same configuration as distance measuring device 1 according to Embodiment 5. However, some of processes performed by signal processing circuit 6 according

EP 4 379 423 A1

to Embodiment 7 are different from the processes performed by signal processing circuit 6 according to Embodiment 5. The following focuses on the difference, avoiding overlapping descriptions.

FIG. 30 is a flowchart illustrating an example of an operation performed by distance measuring device 1 according to Embodiment 7. The flowchart in FIG. 30 is different from the flowchart in FIG. 23 in that the process in step S220 is changed to a process in step S420 and the process in step S240 is changed to a process in step S440. In other words, distance measuring device 1 according to Embodiment 7 is different from distance measuring device 1 according to Embodiment 5 in the following points: distance measuring device 1 according to Embodiment 5 performs the first flare determination process to determine whether a flare is occurring in the area of pixels 12 arranged in a matrix, whereas distance measuring device 1 according to Embodiment 7 performs a third flare determination process to determine, for each of pixels 12, whether a flare is occurring; and in loop 1, distance measuring device 1 according to Embodiment 5 checks whether it has been determined that a flare is occurring in the area of pixels 12, whereas distance measuring device 1 according to Embodiment 7 checks whether it has been determined that a flare is occurring at current pixel 12.

FIG. 31 is a flowchart illustrating one example of the third flare determination process in FIG. 30.

FIG. 32A through FIG. 32C are each a diagram for illustrating one example of the specific operation of the third flare determination process. In FIG. 32A through FIG. 32C, each of squares arranged in a matrix indicates a different one of pixels 12 arranged in a matrix. In FIG. 32A, a hatched square indicates a high-signal-amount pixel. In FIG. 32B, a hatched square indicates pixel 12 that constitutes a high-signal-amount pixel group including at least a predetermined number (e.g., five or more) of high-signal-amount pixels adjacent to each other. In FIG. 32C, a light-colored hatched square indicates pixel 12 located within a predetermined range (e.g., within a range of one pixel) from the high-signal-amount pixel group (a group of dark-colored hatched squares).

It is described herein that the third flare process is performed on all of packets P1 through P6, but it is not necessarily required to target all of packets for the third flare determination process and only predetermined packets may be targeted, for example.

The flowchart in FIG. 31 is different from the flowchart in FIG. 24 in that the processes from step S226 through step S228 are changed to processes from step S426 through step S432. In other words, processes following the processes in loop 1 are different between these two flowcharts.

In FIG. 31, after the processes in loop 1 for all of pixels 12 are completed, signal processing circuit 6 specifies a high-signal-amount pixel group including at least a predetermined number of high-signal-amount pixels adjacent to each other (S426).

The predetermined number may be a value determined in advance and may be determined based on the number of high-signal-amount pixels in a group including high-signal-amount pixels that are adjacent to each other and may be generated when a flare occurs. The number of high-signal-amount pixels is obtained by conducting, for instance, experiments and simulations in advance.

For example, when a total of thirteen pixels 12 that are pixel 12 (3-2), pixel 12 (3-5), pixel 12 (3-6), pixel 12 (2-7), pixel 12 (3-7), pixel 12 (7-5), pixel 12 (8-5), pixel 12 (6-6), pixel 12 (7-6), pixel 12 (8-6), pixel 12 (9-6), pixel 12 (7-7), and pixel 12 (8-7) are high-signal-amount pixels and the predetermined number is 5, as illustrated in FIG. 32A, a group of pixels 12 including a total of eight high-signal-amount pixels adjacent to each other, i.e., pixel 12 (7-5), pixel 12 (8-5), pixel 12 (6-6), pixel 12 (7-6), pixel 12 (8-6), pixel 12 (9-6), pixel 12 (7-7), and pixel 12 (8-7) is specified as a high-signal-amount pixel group, as illustrated in FIG. 32B.

In FIG. 31, when the high-signal-amount pixel group is specified, signal processing circuit 6 performs processes (S427 through S432) in loop 2 for each of pixels 12.

In loop 2, signal processing circuit 6 firstly determines whether current pixel 12 belongs to the high-signal-amount pixel group (S428).

When determining that current pixel 12 belongs to the high-signal-amount pixel group (yes in S428), signal processing circuit 6 determines that there is a flare at current pixel 12 (S430).

When determining that current pixel 12 does not belong to the high-signal-amount pixel group (no in S428), signal processing circuit 6 also determines whether current pixel 12 is located within a predetermined range from the high-signal-amount pixel group (S429).

When determining that current pixel 12 is located within the predetermined range from the high-signal-amount pixel group (yes in S429), signal processing circuit 6 determines that there is a flare at current pixel 12 (S430).

For example, when a total of eight pixels 12 that are pixel 12 (7-5), pixel 12 (8-5), pixel 12 (6-6), pixel 12 (7-6), pixel 12 (8-6), pixel 12 (9-6), pixel 12 (7-7), and pixel 12 (8-7) constitute a high-signal-amount pixel group, as illustrated in FIG. 32B, and the predetermined range is a range of pixels 12 that is within one pixel from the high-signal-amount pixel group, it is determined that there is a flare for a total of eighteen pixels 12 that are pixel 12 (6-4), pixel 12 (7-4), pixel 12 (8-4), pixel 12 (9-4), pixel 12 (5-5), pixel 12 (6-5), pixel 12 (9-5), pixel 12 (10-5), pixel 12 (5-6), pixel 12 (10-6), pixel 12 (5-7), pixel 12 (6-7), pixel 12 (9-7), pixel 12 (10-7), pixel 12 (6-8), pixel 12 (7-8), pixel 12 (8-8), and pixel 12 (9-8), as illustrated in FIG. 32C.

In FIG. 31, when determining that current pixel 12 is not located within the predetermined range from the high-signal-amount pixel group (no in S429), signal processing circuit 6 determines, for current pixel 12, that there is no flare (S431).

When the process in step S430 is ended and the process in step S431 is ended in the process in FIG. 31, signal processing circuit 6 ends the processes in loop 2 for current pixel 12 and starts the loop processes 2 for the next pixel 12. Alternatively, when the loop processes 2 for all of pixels 12 are ended, signal processing circuit 6 ends the third flare process after going through the processes in loop 2.

As described above, in distance measuring device 1 according to Embodiment 7, the signal processing circuit further: determines presence or absence of a flare for each of the pixels; performs the determination of the presence or absence of stray light performed for each of the pixels, for a pixel for which it is determined that there is a flare; and also calculates, for each of the pixels, the distance value of a pixel for which it is determined that there is no flare, using the first process.

This makes it possible to further reduce the influence of stray light since the first process or the second process is selectively performed for each of pixels in accordance with the determination of the presence or absence of a flare.

The irradiation light may be pulsed light. In the determination of the presence or absence of a flare performed for each of the pixels, the signal processing circuit may determine that there is a flare for (i) a pixel included in a high-signal-amount pixel group including at least a predetermined number of high-signal-amount pixels adjacent to each other and (ii) a pixel located within a predetermined range from the high-signal-amount pixel group. The high-signal-amount pixel may be a pixel whose total number of packets whose amounts of signal exceed a fourth reference value exceeds a first reference number.

According to this, it is possible to determine the presence or absence of a flare based on pixels constituting a high-signal-amount pixel group.

[Embodiment 8]

Embodiment 8 will describe distance measuring device 1 according to Embodiment 8 resulting from modifying part of the operation performed by distance measuring device 1 according to Embodiment 6.

At a stage before the stray light determination process is performed on each of pixels 12, distance measuring device 1 according to Embodiment 6 determines whether a flare is occurring (determines the presence or absence of a flare) in the area of pixels 12 arranged in a matrix, whereas distance measuring device 1 according to Embodiment 8 determines, for each of pixels 12, whether a flare is occurring.

Distance measuring device 1 according to Embodiment 8 has the same configuration as distance measuring device 1 according to Embodiment 6. However, some of processes performed by signal processing circuit 6 according to Embodiment 8 are different from the processes performed by signal processing circuit 6 according to Embodiment 6. The following focuses on the difference, avoiding overlapping descriptions.

FIG. 33 is a flowchart illustrating an example of an operation performed by distance measuring device 1 according to Embodiment 8. The flowchart in FIG. 33 is different from the flowchart in FIG. 27 in that the process in step S320 is changed to a process in S520 and the process in step S240 is changed to a process in step S540. In other words, distance measuring device 1 according to Embodiment 6 is different from distance measuring device 1 according to Embodiment 8 in the following points: distance measuring device 1 according to Embodiment 6 performs the second flare determination process to determine whether a flare is occurring in the area of pixels 12 arranged in a matrix, whereas distance measuring device 1 according to Embodiment 8 performs a fourth flare determination process to determine, for each of pixels 12, whether a flare is occurring; and distance measuring device 1 according to Embodiment 6 checks whether it has been determined that a flare is occurring in the area of pixels 12, whereas distance measuring device 1 according to Embodiment 8 checks whether it has been determined that a flare is occurring at current pixel 12.

FIG. 34 is a flowchart illustrating one example of the fourth flare determination process in FIG. 33.

FIG. 35 is a diagram for illustrating one example of the specific operation of the fourth flare determination process. In FIG. 35, each of squares arranged in a straight line in an OB pixel area indicates a different one of OB pixels 15 arranged in a straight line, and a hatched square indicates OB pixel 15 whose amount of signal exceeds the fifth reference value. In FIG. 35, each of squares arranged in a matrix in the effective pixel area indicates a different one of pixels 12 arranged in a matrix, and a light-colored hatched square indicates pixel 12 that is in a predetermined positional relationship with OB pixels 15 whose amounts of signal exceed the fifth reference value.

In FIG. 34, signal processing circuit 6 firstly specifies OB pixel 15 whose amount of signal exceeds a fifth reference value in a predetermined packet (S521). This predetermined packet may be a packet that is determined in advance. In this case, the predetermined packet may be determined based on the number of OB pixels 15 whose amounts of signal exceed the fifth reference value. The number of OB pixels 15 may be counted when a flare is occurring in, for instance, experiments and simulations conducted in advance. The predetermined packet is, for example, packet P1.

For example, signal processing circuit 6 specifies, as OB pixels 15 whose amounts of signal exceed the fifth reference value, a total of seven OB pixels 15 that are hatched in the OB pixel areas, as illustrated in FIG. 35.

In FIG. 34, when OB pixels 15 whose amounts of signal exceed the fifth reference value are specified, signal processing circuit 6 performs, for each of pixels 12, processes (S522 through S526) in loop 1.

In loop 1, signal processing circuit 6 firstly determines whether current pixel 12 is in a predetermined positional relationship with at least one OB pixel 15 whose amount of signal exceeds the fifth reference value (S523).

Subsequently, when determining that current pixel 12 is in the predetermined positional relationship with at least one OB pixel 15 whose amount of signal exceeds the fifth reference value (yes in S523), signal processing circuit 6 determines that there is a flare at current pixel 12 (S524).

For example, signal processing circuit 6 determines that there is a flare for a total of twelve pixels 12 that are pixel 12 (1-1), pixel 12 (2-1), pixel 12 (1-2), pixel 12 (2-2), pixel 12 (1-3), pixel 12 (2-3), pixel 12 (1-4), pixel 12 (2-4), pixel 12 (1-5), pixel 12 (2-5), pixel 12 (1-6), and pixel 12 (2-6) that are in a predetermined positional relationship with at least one OB pixel 15 whose amount of signal exceeds the fifth reference value, as illustrated in FIG. 35.

In FIG. 34, when determining that current pixel 12 is not in the predetermined positional relationship with at least one OB pixel 15 whose amount of signal exceeds the fifth reference value (no in S523), signal processing circuit 6 determines that there is no flare at current pixel 12 (S525).

When the process in step S524 is ended and the process in step S525 is ended, signal processing circuit 6 ends the processes in loop 1 for current pixel 12 and starts loop processes 1 for the next pixel 12. Alternatively, when loop processes 1 for all of pixels 12 are ended, signal processing circuit 6 ends the fourth flare process after going through the processes in loop 1.

As described above, in distance measuring device 1 according to Embodiment 8, the signal processing circuit further: determines presence or absence of a flare for each of the pixels; performs the determination of the presence or absence of stray light performed for each of the pixels, for a pixel for which it is determined that there is a flare; and also calculates, for each of the pixels, the distance value of a pixel for which it is determined that there is no flare, using the first process.

This makes it possible to further reduce the influence of stray light since the first process or second process is selectively performed for each of pixels in accordance with the determination of the presence or absence of a flare.

The irradiation light may be pulsed light. In the determination of the presence or absence of a flare performed for each of the pixels, the signal processing circuit may determine that there is a flare for a pixel that is in a predetermined positional relationship with at least one optical black pixel whose amount of signal exceeds a fifth reference value in a predetermined packet.

According to this, it is possible to determine the presence or absence of a flare based on at least one optical black pixel whose amount of signal exceeds the fifth reference value.

In each of the above-described embodiments, each of elements may be included in dedicated hardware or implemented by executing a software program suitable for the element. Each of the elements may be implemented by a program executor such as a central processing unit (CPU) or a processor reading and executing a software program recorded on a recording medium such as a hard disk or a semiconductor memory. Software that implements, for instance, the distance measuring device according to each of the embodiments is a program as follows. In other words, the program causes a computer to execute the processes illustrated in the flowchart in, for instance, FIG. 5, FIG. 8, FIG. 20, FIG. 23, FIG. 27, FIG. 30, or FIG. 33.

Although a distance measuring device and a distance measurement method according to one or more aspects of the present disclosure have been described based on embodiments, the present disclosure is not limited to these embodiments. Other embodiments obtained by various modifications of the embodiments that may be conceived by persons skilled in the art, as well as embodiments resulting from arbitrary combinations of elements from different embodiments that do not depart from the essence of the present disclosure are also included in the range of the one or more aspects of the present disclosure.

[Industrial Application]

The present disclosure can be used in distance measuring devices that generate depth images.

[Reference Signs List]

1, 90 distance measuring device

2, 91 light source

3 optical system

4 solid-state imaging device

5 control circuit

6 signal processing circuit

12, 13, 93, P20, P21,P22, P42, P43, ,P23, P24, P30, P31, P32, P33, P40, P41,P44, P50, P51, P52, P53 pixelP00, P01, P02, P03, P04, P10, P11, P12, P13 pixel

14 VCCD

15 optical black pixel (OB pixel)

92 image sensor

94 optical system

95 subject

96, 97 object

98 strong direct reflected light

A0-A6 packet

E1-E6 exposure pulse

L0 emission pulse

P1-P6 packet

PX target pixel

R0 direct reflected light

R1 stray light

R2 indirect reflected light

**Claims**

1. A distance measuring device comprising:

   a light source that emits irradiation light;
   a solid-state imaging device that generates, for each of pixels, a plurality of packets that hold signal charges generated at different exposure timings for the irradiation light; and
   a signal processing circuit that calculates a distance value based on the plurality of packets, wherein
   for each of the pixels, the signal processing circuit:

   determines presence or absence of stray light using the plurality of packets corresponding to the pixel;
   when it is determined that there is no stray light, calculates a distance value of the pixel using a first process; and
   when it is determined that there is stray light, calculates a distance value of the pixel using a second process different from the first process.

2. The distance measuring device according to claim 1, wherein
   for each of the pixels, the signal processing circuit:

compares a first reference value with an amount of signal of each of the plurality of packets corresponding to the pixel;
counts a total number of packets whose amounts of signal exceed the first reference value; and
when the total number counted exceeds a threshold, determines that there is stray light.

3. The distance measuring device according to claim 1, wherein
for each of the pixels, the signal processing circuit:

selects top N packets in descending order of amount of signal among the plurality of packets corresponding to the pixel, where N is an integer of two or greater;
determines whether exposure timings of the top N packets selected are in a predetermined adjacency relationship; and
when the exposure timings are not in the predetermined adjacency relationship, determines that there is stray light.

4. The distance measuring device according to claim 1, wherein

the irradiation light is pulsed light,
the signal processing circuit:

compares a first reference value with an amount of signal of each of the plurality of packets corresponding to a single pixel;
counts a total number of packets that exceed the first reference value;
when the total number counted exceeds a threshold, determines that there is stray light;
selects top N packets in descending order of amount of signal among the plurality of packets, where N is an integer of two or greater;
determines whether exposure timings of the top N packets selected are in a predetermined adjacency relationship; and
when the exposure timings are not in the predetermined adjacency relationship, determines that there is stray light.

5. The distance measuring device according to claim 2 or 4, wherein
the threshold is determined according to a total number of packets to be used in the calculation of the distance value among the plurality of packets.

6. The distance measuring device according to claim 4, wherein
the threshold is two and the N is two.

7. The distance measuring device according to any one of claims 4 to 6, wherein
the signal processing circuit:

compares a second reference value with each of M packets corresponding to M distance zones in ascending order of distance from the distance measuring device among the plurality of packets; and
determines that there is stray light when at least one of the M packets exceeds the second reference value.

8. The distance measuring device according to any one of claims 4 to 6, wherein
the signal processing circuit:

compares a second reference value with each of the plurality of packets; and
determines that there is stray light (i) when at least one of top M packets corresponding to M distance zones in ascending order of distance from the distance measuring device among the plurality of packets exceeds the second reference value, and (ii) when at least one of packets excluding the top M packets among the plurality of packets exceeds the second reference value.

9. The distance measuring device according to claim 7 or 8, wherein
the second reference value is determined for each of the plurality of packets.

10. The distance measuring device according to any one of claims 1 to 9, wherein

in the second process, the signal processing circuit:

compares a third reference value with each of the plurality of packets;

changes the amount of signal of a packet whose amount of signal is less than the third reference value among the plurality of packets to 0;

multiplies each of packets whose amounts of signal are not 0 among the plurality of packets with a coefficient having a larger value in descending order of distance from the distance measuring device;

selects, as a first packet, a largest packet among the packets that have been multiplied;

selects, as a second packet, a larger packet out of packets adjacent to the first packet in terms of distance; and

calculates a distance value from the first packet and the second packet.

11. The distance measuring device according to claim 10, wherein
in the second process, the signal processing circuit:

determines whether at least one of the packets adjacent to the first packet in terms of distance is included in N packets in ascending order of distance from the distance measuring device;

when it is determined that the at least one of the packets is included in the N packets, selects, as a second packet, a larger packet out of the packets that are adjacent to the first packet in terms of distance and have been multiplied; and

when it is determined that the at least one of the packets is not included in the N packets, selects, as a second packet, a larger packet out of the packets that are adjacent to the first packet in terms of distance and have not been multiplied.

12. The distance measuring device according to any one of claims 1 to 9, wherein
in the second process, the signal processing circuit:

compares a third reference value with each of the plurality of packets;

changes an amount of signal of a packet whose amount of signal is less than the third reference value among the plurality of packets to 0;

multiplies each of packets whose amounts of signal are not 0 among the plurality of packets with a coefficient having a larger value in descending order of distance from the distance measuring device;

selects, as a first packet, a largest packet among the packets that have been multiplied;

determines whether the first packet is placed at a predetermined position in ascending order of distance from the distance measuring device;

when it is determined that the first packet is placed at the predetermined position in the ascending order and both packets that are adjacent to the first packet in terms of distance and have not been multiplied exceed the third reference value, selects, as a second packet, a packet that is farther from the distance measuring device out of the packets adjacent to the first packet in terms of distance; and

calculates a distance value from the first packet and the second packet.

13. The distance measuring device according to claim 2, wherein

the irradiation light is a continuous wave having an amplitude that changes periodically, and
the threshold is three.

14. The distance measuring device according to any one of claims 1 to 9 and 13, wherein
the signal processing circuit disables the pixel in the second process.

15. The distance measuring device according to any one of claims 1 to 13, wherein
for each of the pixels, the signal processing circuit:

selects, from among the plurality of packets, at least two packets for use in the calculation of the distance value in the first process and the second process; and

corrects a result of the selection of the at least two packets selected in the second process, based on a result of selecting a surrounding pixel of the pixel.

16. The distance measuring device according to claim 1, wherein
the signal processing circuit further:

determines presence or absence of a flare;

when it is determined that there is a flare, performs the determination of the presence or absence of stray light performed for each of the pixels; and

when it is determined that there is no flare, calculates, for each of the pixels, a distance value of the pixel using the first process.

17. The distance measuring device according to claim 16, wherein

the irradiation light is pulsed light, and

in the determination of the presence or absence of a flare, the signal processing circuit determines that there is a flare when a total number of high-signal-amount pixels exceeds a second reference number, a high-signal-amount pixel being a pixel whose total number of packets whose amounts of signal exceed a fourth reference value exceeds a first reference number.

18. The distance measuring device according to claim 16, wherein

the irradiation light is pulsed light, and

in the determination of the presence or absence of a flare, the signal processing circuit determines that there is a flare when a total number of optical black pixels is at least a third reference number and at most a fourth reference number greater than the third reference number, an optical black pixel being a pixel whose amount of signal exceeds a fifth reference value in a predetermined packet.

19. The distance measuring device according to claim 18, wherein
the fifth reference value changes dynamically.

20. The distance measuring device according to claim 1, wherein
the signal processing circuit further:

determines presence or absence of a flare for each of the pixels;

performs the determination of the presence or absence of stray light performed for each of the pixels, for a pixel for which it is determined that there is a flare; and

also calculates, for each of the pixels, a distance value of a pixel for which it is determined that there is no flare, using the first process.

21. The distance measuring device according to claim 20, wherein

the irradiation light is pulsed light,

in the determination of the presence or absence of a flare performed for each of the pixels, the signal processing circuit determines that there is a flare for (i) a pixel included in a high-signal-amount pixel group including at least a predetermined number of high-signal-amount pixels adjacent to each other and (ii) a pixel located within a predetermined range from the high-signal-amount pixel group, and

the high-signal-amount pixel is a pixel whose total number of packets whose amounts of signal exceed a fourth reference value exceeds a first reference number.

22. The distance measuring device according to claim 20, wherein

the irradiation light is pulsed light, and

in the determination of the presence or absence of a flare performed for each of the pixels, the signal processing circuit determines that there is a flare for a pixel that is in a predetermined positional relationship with at least one optical black pixel whose amount of signal exceeds a fifth reference value in a predetermined packet.

23. A distance measurement method that uses a solid-state imaging device and a light source that emits irradiation light, the distance measurement method comprising the following to be executed for each of pixels:

generating a plurality of packets that hold signal charges generated at different exposure timings for the irradiation light;

determining presence or absence of stray light using the plurality of packets corresponding to the pixel;

when it is determined that there is no stray light, calculating a distance value of the pixel using a first process; and

when it is determined that there is stray light, calculating a distance value of the pixel using a second process different from the first process.

# FIG. 1

Subject

Irradiation light      Reflected light

1

2    3     Distance measuring device

4

| Light source | Solid-state imaging device | Packet |

Emission control signal      Exposure control signal

5   Control circuit      6   Signal processing circuit

Depth image

# FIG. 2

# FIG. 3

# FIG. 4A

# FIG. 4B

# FIG. 5

```
                    ┌─────────┐
                    │  Start  │
                    └─────────┘
                         │
                         ▼
          ┌────────────────────────────┐
          │ Perform packet generation  │──S50
          │ and pre-processing         │
          └────────────────────────────┘
                         │
                         ▼
          ┌────────────────────────────┐
          │ Loop 1: start              │──S51
          │ (per pixel)                │
          └────────────────────────────┘
                         │
                         ▼
          ┌────────────────────────────┐
          │║Stray light determination  │──S52
          │║process                    │
          └────────────────────────────┘
                         │
                         ▼         S53
                    ╱─────────────╲
                   ╱   There is     ╲      Yes
                   ╲  stray light?  ╱────────────────┐
                    ╲─────────────╱                  │
                         │ No                         │
                         │                            │
           S54           ▼                 S55        ▼
    ┌────────────────────────┐    ┌────────────────────────┐
    │ First process          │    │ Second process         │
    │ (selection process A)  │    │ (disabling)            │
    └────────────────────────┘    └────────────────────────┘
                         │                            │
                         ▼◄───────────────────────────┘
          ┌────────────────────────────┐
          │ Loop 1: end                │──S56
          └────────────────────────────┘
                         │
                         ▼
          ┌────────────────────────────┐
          │ Distance calculation       │──S57
          └────────────────────────────┘
                         │
                         ▼
                    ┌─────────┐
                    │   End   │
                    └─────────┘
```

# FIG. 6

Start (stray light
determination process S52)

Count number of packets
whose amounts of signal
exceed first reference value ~S61

S62
Count number > threshold? ──Yes──►

No

Select top two packets ~S63

S64
Selected packets
are in predetermined adjacency
relationship
? ──No──►

Yes    S65                                    S66
Determine that there is           Determine that there is
no stray light                    stray light

End

## FIG. 7A

Direct reflected light

Amount of signal

First reference value

A1   A2   A3   A4   A5   A6

## FIG. 7B

Direct reflected light

Stray light (indirect reflected light)

Amount of signal

First reference value

A1   A2   A3   A4   A5   A6

## FIG. 7C

Stray light (flare)

Direct reflected light

Amount of signal

First reference value

A1   A2   A3   A4   A5   A6

## FIG. 7D

Direct reflected light

Amount of signal

First reference value

A1   A2   A3   A4   A5   A6

# FIG. 8

```
                    ┌──────────┐
                    │  Start   │
                    └────┬─────┘
                         │
        ┌────────────────────────────────┐
        │ Perform packet generation      │ ～S50
        │ and pre-processing             │
        └────────────────┬───────────────┘
                         │
        ┌────────────────────────────────┐
       /  Loop 1: start                  /  ～S51
      /   (per pixel)                    /
        └────────────────┬───────────────┘
                         │
        ┌────────────────────────────────┐
        ║ Stray light determination      ║ ～S52
        ║ process                        ║
        └────────────────┬───────────────┘
                         │           S53
                    ◇─────────────◇
                   ╱  There is      ╲  ──── Yes ────┐
                   ╲  stray light ?  ╱              │
                    ◇─────────────◇                 │              S81
                         │                          ▼
                         No              ┌────────────────────────┐
                                         ║ Level determination    ║
                                         ║ process                ║
                                         └───────────┬────────────┘
                                                     │      S82
                              ┌──── No ─────◇─────────────◇
                              │            ╲  There is flare? ╱
                              │             ◇─────────────◇
                              │                   │
                              │                  Yes          S83
        ┌────────────────────┐          ┌────────────────────────┐
        │ First process      │ S54      │ Second process (first  │
        │ (selection process A)│         │ level-cut coefficient  │
        └──────────┬─────────┘          │ method)                │
                   │                    └───────────┬────────────┘
                   │◄───────────────────────────────┘
        ┌────────────────────────────────┐
       ╲  Loop 1: end                   ╲  ～S56
        └────────────────┬───────────────┘
                         │
        ┌────────────────────────────────┐
        ║ Correction process             ║ ～S84
        ║ on result of selection         ║
        └────────────────┬───────────────┘
                         │
        ┌────────────────────────────────┐
        │ Distance calculation           │ ～S57
        └────────────────┬───────────────┘
                         │
                    ┌──────────┐
                    │   End    │
                    └──────────┘
```

# FIG. 9

```
┌──────────────────────────────┐
│ Start (level determination   │
│ process S81)                 │
└──────────────────────────────┘
              │
              ▼
┌──────────────────────────────┐
│ Obtain M packets             │ ～S91
│ in front                     │
└──────────────────────────────┘
              │
              ▼           S92
        ╱────────────╲
       ╱  Amount of   ╲        Yes
      ╱ signal exceeds  ╲──────────────┐
      ╲ second reference ╱              │
       ╲   value ?      ╱               │
        ╲────────────╱                  ▼
              │ No        ┌──────────────────────────────┐
              │           │ Obtain remaining packets     │ ～S94
              │           │ excluding M packets          │
              │           └──────────────────────────────┘
              │                         │
              │                         ▼           S95
              │                   ╱────────────╲
              │        No        ╱  Amount of   ╲
              │◄─────────────────╲ signal exceeds second ╱
              │                   ╲ reference value ?   ╱
              │                    ╲────────────╱
              │                         │ Yes     S96
              ▼  S93                     ▼
┌──────────────────────┐      ┌──────────────────────┐
│ Determine that       │      │ Determine that       │
│ there is no flare     │      │ there is flare       │
└──────────────────────┘      └──────────────────────┘
              │                         │
              ▼◄────────────────────────┘
        ┌──────────┐
        │   End    │
        └──────────┘
```

# FIG. 10A

# FIG. 10B

# FIG. 10C

# FIG. 11

```
        Start
(second process S83)
```

Compare third reference value with signal amount of each of packets — S110

Set packet whose amount of signal is less than third reference value to 0 — S111

Multiply packet with coefficient provided per packet — S112

Select largest packet — S113

Obtain adjacent packet — S114

S115
Included in M packets in ascending order of distance? — Yes

No — S116
Select larger packet out of packets that have not been multiplied

S117
Select larger packet out of adjacent packets that have been multiplied

End

# FIG. 12

(a)

Amount of signal

A1　A2　A3　A4　A5　A6

Third reference value

↓ (Zeroization)

(b)

Amount of signal

A1　A2　A3　A4　A5　A6

Third reference value

↓ (Coefficient multiplication)

(c)

Amount of signal

A1　A2　A3　A4　A5　A6

↓ (First selection)

(d)

Amount of signal

A1　A2　A3　A4　A5　A6

↓ (Second selection)

(e)

Amount of signal

A1　A2　A3　A4　A5　A6

# FIG. 13

Start
(correction process S84)

Obtain indices of
surrounding pixels — S131

Count number K of surrounding
pixels having index
indicating same value — S132

S133

K ≥ L? — No

Yes

S134

Index of
current pixel is different from
index of K surrounding
pixels? — No

Yes

Correct index of current pixel — S135

End

## FIG. 14A

## FIG. 14B

| Index | Selected packets |
|-------|------------------|
| 1 | P1, P2 |
| 2 | P2, P3 |
| 3 | P3, P4 |
| 4 | P4, P5 |
| 5 | P5, P6 |

## FIG. 15

## FIG. 16

## FIG. 17

Intensity

Irradiation light

1/fmod

Time (phase)

Intensity

Reflected light

A0    A3
A1  A2

φ 0

φ 0+π

φ 0+π/2    φ 0+3π/2

Phase delay φ

Background light

Time (phase)

## FIG. 18

```
┌─────────────────────────────┐
│  Start (stray light          │
│  determination process S52)  │
└─────────────────────────────┘
              │
              ▼
┌─────────────────────────────┐
│ Count number of packets      │
│ whose amounts of signal      │─ S61
│ exceed first reference value │
└─────────────────────────────┘
              │
              ▼          S62
         ◇─────────────────◇
         Count number > threshold    Yes
         ◇         ?       ◇───────────┐
              │                         │
              No                        │
              ▼          S65            ▼          S66
┌─────────────────────────┐   ┌─────────────────────────┐
│ Determine that there is │   │ Determine that there    │
│ no stray light          │   │ is stray light          │
└─────────────────────────┘   └─────────────────────────┘
              │                         │
              ▼◄────────────────────────┘
         ┌──────────┐
         │   End    │
         └──────────┘
```

## FIG. 19

Intensity

Irradiation light

1/fmod

Time (phase)

Intensity

Reflected light

A0  A1  A2  A3

Phase delay φ

First reference value

φ 0

φ 0+π/2

φ 0+π

φ 0+3π/2

Time (phase)

Intensity

Reflected light

A0  A1  A2  A3

Stray light (flare)

Reflected light

First reference value

φ 0

φ 0+π/2

φ 0+π

φ 0+3π/2

Background light + noise

Time (phase)

# FIG. 20

```
                    ( Start )
                       │
        ┌──────────────────────────────┐
        │ Perform packet generation    │── S50
        │ and pre-processing           │
        └──────────────────────────────┘
                       │
        ╱──────────────────────────────╲
        │ Loop 1: start                 │── S51
        │ (per pixel)                   │
        ╲──────────────────────────────╱
                       │
        ┌┤─────────────────────────────┤┐
        │ Stray light determination    │── S52
        │ process                       │
        └┤─────────────────────────────┤┘
                       │           S53
                       ▼
              ◇─────────────────◇      Yes
              │   There is      │──────────────┐
              │  stray light ?  │              │
              ◇─────────────────◇              ▼                    S81
                   │                ┌┤──────────────────────┤┐
                   │ No             │ Level determination    │── 
                   │                │ process                │
                   │                └┤──────────────────────┤┘
                   │                         │          S82
                   │            No           ▼
                   │◄────────────────◇─────────────────◇
                   │                 │  There is flare? │
                   │                 ◇─────────────────◇
                   │                         │ Yes        S83A
         S54       ▼                         ▼
        ┌──────────────────┐      ┌──────────────────────────┐
        │ First process    │      │ Second process (second   │
        │ (selection       │      │ level-cut coefficient    │
        │  process A)      │      │ method)                  │
        └──────────────────┘      └──────────────────────────┘
                   │                         │
                   ▼◄────────────────────────┘
        ╱──────────────────────────────╲
        │ Loop 1: end                   │── S56
        ╲──────────────────────────────╱
                       │
        ┌┤─────────────────────────────┤┐
        │ Correction process            │── S84
        │ on result of selection        │
        └┤─────────────────────────────┤┘
                       │
        ┌──────────────────────────────┐
        │ Distance calculation          │── S57
        └──────────────────────────────┘
                       │
                    ( End )
```

# FIG. 21

Start
(second process S83A)

Compare third reference value with signal amount of each of packets — S110

Set packet whose amount of signal is less than third reference value to 0 — S111

Multiply packet with coefficient provided per packet — S112

Select largest packet — S113

At predetermined position in ascending order of distance ? — S124

Yes

No

Adjacent packets that have not been multiplied have amounts of signal that exceed third reference value ? — S125

No

Yes

Select larger packet out of adjacent packets that have not been multiplied — S126

Select farther packet out of adjacent packets — S127

End

# FIG. 22

(a)

Amount of signal

A1  A2  A3  A4  A5  A6 ----Third reference value

(Zeroization)

(b)

Amount of signal

A1  A2  A3  A4  A5  A6 Third reference value

(Coefficient multiplication)

(c)

Amount of signal

A1  A2  A3  A4  A5  A6

(First selection)

(d)

Amount of signal

A1  A2  A3  A4  A5  A6

(Second selection)

(e)

Amount of signal

A1  A2  A3  A4  A5  A6

# FIG. 23

```
                    ┌─────────────┐
                    │    Start    │
                    └──────┬──────┘
                           ▼
              ┌────────────────────────┐
              │    Generate packets    │──S210
              └────────────┬───────────┘
                           ▼
              ┌────────────────────────┐
              │ First flare            │──S220
              │ determination process  │
              └────────────┬───────────┘
                           ▼
              ┌────────────────────────┐
              │ Perform pre-processing │──S230
              └────────────┬───────────┘
                           ▼
              ╱────────────────────────╲
              │    Loop 1: start        │──S51
              │    (per pixel)          │
              ╲────────────┬────────────╱
                           │      S240
          No      ◇─────────────────◇
      ◄───────────  There is flare?
                    ◇─────────────────◇
                           │ Yes
                           ▼
              ┌────────────────────────┐
              │ Stray light            │──S52
              │ determination process  │
              └────────────┬───────────┘
                           │      S53
                    ◇─────────────────◇        Yes
                    │  There is        ├──────────────┐
                    │  stray light?    │              │
                    ◇─────────────────◇              │
                           │ No   S54                S83
                           ▼                          ▼
              ┌────────────────────┐   ┌──────────────────────────┐
              │ First process      │   │ Second process (first    │
              │ (selection process A)  │ level-cut coefficient    │
              └──────────┬─────────┘   │ method)                  │
                         │             └────────────┬─────────────┘
                         ◄──────────────────────────┘
                         ▼
              ╱────────────────────────╲
              │    Loop 1: end          │──S56
              ╲────────────┬────────────╱
                           ▼
              ┌────────────────────────┐
              │ Correction process     │──S84
              │ on result of selection │
              └────────────┬───────────┘
                           ▼
              ┌────────────────────────┐
              │  Distance calculation  │──S57
              └────────────┬───────────┘
                           ▼
                    ┌─────────────┐
                    │     End     │
                    └─────────────┘
```

# FIG. 24

Start (first flare determination process S220)

Loop 1: start (per pixel) — S221

Count number of packets whose amounts of signal exceed fourth reference value — S222

S223
Count number > first reference number? — No

Yes

Determine that pixel is high-signal-amount pixel — S224

Loop 1: end — S225

S226
High-signal-amount pixel > second reference number ? — No

Yes — S227

Determine that there is flare

S228
Determine that there is no flare

End

# FIG. 25

FIG. 26

OB pixel area

Effective pixel area

15

12, 13

# FIG. 27

```
                    ┌─────────────┐
                    │    Start    │
                    └──────┬──────┘
                           ▼
              ┌──────────────────────────┐
              │     Generate packets     │──S210
              └────────────┬─────────────┘
                           ▼
              ┌──────────────────────────┐
              │   Second flare           │──S320
              │   determination process  │
              └────────────┬─────────────┘
                           ▼
              ┌──────────────────────────┐
              │  Perform pre-processing   │──S230
              └────────────┬─────────────┘
                           ▼
              ┌──────────────────────────┐
              │    Loop 1: start          │──S51
              │    (per pixel)            │
              └────────────┬─────────────┘
                           │      S240
              No          ◇───────────◇
        ┌────────────────<  There is flare?  >
        │                 ◇───────────◇
        │                       │ Yes
        │                       ▼
        │         ┌──────────────────────────┐
        │         │   Stray light            │──S52
        │         │   determination process  │
        │         └────────────┬─────────────┘
        │                      │      S53
        │                     ◇───────────◇        Yes
        │                    <  There is     >──────────┐
        │                    <  stray light ?>          │
        │                     ◇───────────◇             │
        │              No           │                   │
        │        S54                │                   │   S83
        └───────────────────────────┤                   │
                                     ▼                   ▼
              ┌──────────────────────────┐   ┌──────────────────────────┐
              │    First process         │   │ Second process (first level-│
              │    (selection process A) │   │ cut coefficient method)    │
              └────────────┬─────────────┘   └────────────┬─────────────┘
                           ◄──────────────────────────────┘
                           ▼
              ┌──────────────────────────┐
              │     Loop 1: end           │──S56
              └────────────┬─────────────┘
                           ▼
              ┌──────────────────────────┐
              │   Correction process      │──S84
              │   on result of selection  │
              └────────────┬─────────────┘
                           ▼
              ┌──────────────────────────┐
              │   Distance calculation    │──S57
              └────────────┬─────────────┘
                           ▼
                    ┌─────────────┐
                    │     End     │
                    └─────────────┘
```

# FIG. 28

Start (second flare determination process S320)

Count number of OB pixels whose amounts of signal exceed fifth reference value — S321

S322
Third reference number ≤ count number ≤ fourth reference number ? — No

Yes — S323
Determine that there is flare

S324
Determine that there is no flare

End

## FIG. 29A

Case 1

OB pixel area

Effective pixel area

15

12, 13

## FIG. 29B

Case 2

OB pixel area

Effective pixel area

15

12, 13

# FIG. 30

```
            ┌──────────────┐
            │    Start     │
            └──────┬───────┘
                   │
         ┌─────────▼─────────┐
         │ Generate packets  │~S210
         └─────────┬─────────┘
                   │
        ┌──────────▼──────────┐
        │ Third flare         │~S420
        │ determination process│
        └──────────┬──────────┘
                   │
        ┌──────────▼──────────┐
        │ Perform pre-processing│~S230
        └──────────┬──────────┘
                   │
          ╱────────▼────────╲
         │  Loop 1: start    │~S51
         │  (per pixel)      │
          ╲─────────────────╱
                   │      S440
            ╱──────▼──────╲
      No  ╱ There is flare? ╲
    ◄─────╲               ╱
          ╲─────────────╱
                   │ Yes
        ┌──────────▼──────────┐
        │ Stray light         │~S52
        │ determination process│
        └──────────┬──────────┘
                   │       S53
            ╱──────▼──────╲      Yes
          ╱  There is      ╲────────────┐
          ╲  stray light ? ╱            │
           ╲──────────────╱             │
                   │ No   S54           │      S83
        ┌──────────▼──────────┐  ┌──────▼──────────────┐
        │ First process       │  │ Second process (first level-│
        │ (selection process A)│  │ cut coefficient method)│
        └──────────┬──────────┘  └──────┬──────────────┘
                   │◄───────────────────┘
          ╱────────▼────────╲
         │  Loop 1: end      │~S56
          ╲─────────────────╱
                   │
        ┌──────────▼──────────┐
        │ Correction process  │~S84
        │ on result of selection│
        └──────────┬──────────┘
                   │
        ┌──────────▼──────────┐
        │ Distance calculation│~S57
        └──────────┬──────────┘
                   │
            ┌──────▼───────┐
            │     End      │
            └──────────────┘
```

# FIG. 31

Start (third flare
determination process S420)

Loop 1: start
(per pixel) — S221

Count number of packets
whose amounts of signal — S222
exceed fourth reference value

S223
Count number > first
reference number
? — No

yes

Determine that pixel is — S224
high-signal-amount pixel

Loop 1: end — S225

Specify high-signal-amount
pixel group — S426

Loop 2: start
(per pixel) — S427

S428
Pixel belongs
to high-signal-amount pixel — No
group?

Yes

S429
Within
predetermined range — No
from high-signal-amount pixel
group?

Yes

S431

Determine that there is flare — S430

Determine that there is no flare

Loop 2: end — S432

End

## FIG. 32A

## FIG. 32B

## FIG. 32C

# FIG. 33

```
                    ┌─────────────┐
                    │    Start    │
                    └──────┬──────┘
                           │
              ┌────────────┴────────────┐
              │    Generate packets     │──S210
              └────────────┬────────────┘
                           │
              ┌────────────┴────────────┐
              │ Fourth flare            │──S520
              │ determination process   │
              └────────────┬────────────┘
                           │
              ┌────────────┴────────────┐
              │  Perform pre-processing │──S230
              └────────────┬────────────┘
                           │
              ╱────────────┴────────────╲
              │  Loop 1: start           │
              │  (per pixel)             │──S51
              ╲─────────────┬───────────╱
                            │            S540
                            ▼
        No    ╱─────────────────────────╲
     ┌────────     There is flare?       
     │        ╲─────────────┬───────────╱
     │                      │ Yes
     │         ┌────────────┴────────────┐
     │         │ Stray light             │──S52
     │         │ determination process   │
     │         └────────────┬────────────┘
     │                      │          S53
     │                      ▼
     │        ╱─────────────────────────╲    Yes
     │        │  There is                ├──────────┐
     │        │  stray light?            │          │
     │        ╲─────────────┬───────────╱           │
     │                      │ No    S54             │  S83
     │                      ▼                        ▼
     │         ┌────────────────────────┐  ┌────────────────────────┐
     └────────▶│ First process          │  │ Second process (first  │
               │ (selection process A)  │  │ level-cut coefficient  │
               └────────────┬───────────┘  │ method)                │
                            │               └────────────┬──────────┘
                            ◀───────────────────────────┘
               ╱────────────┴────────────╲
               │     Loop 1: end          │──S56
               ╲────────────┬────────────╱
                            │
               ┌────────────┴────────────┐
               │ Correction process      │──S84
               │ on result of selection  │
               └────────────┬────────────┘
                            │
               ┌────────────┴────────────┐
               │  Distance calculation   │──S57
               └────────────┬────────────┘
                            │
                    ┌───────┴──────┐
                    │     End      │
                    └──────────────┘
```

# FIG. 34

```
       ╭─────────────────────────────╮
       │  Start (fourth flare        │
       │  determination process S520)│
       ╰─────────────────────────────╯
                      │
                      ▼
       ┌─────────────────────────────┐
       │ Specify OB pixel whose amount│ ～ S521
       │ of signal exceeds fifth      │
       │ reference value              │
       └─────────────────────────────┘
                      │
                      ▼
       ╱─────────────────────────────╲
      ╱  Loop 1: start               ╲ ～ S522
      │  (per pixel)                  │
      └───────────────────────────────┘
                      │
                      ▼    S523
                 ╱─────────────╲
                ╱ Pixel is      ╲
               ╱ in predetermined ╲
              ╱ positional relationship with ╲  No
             ╱ OB pixel whose amount of signal ╲────────────┐
              ╲ exceeds fifth reference        ╱             │
               ╲     value?                   ╱              │
                ╲─────────────────────────────╱              │
                      │  Yes    S524                         │   S525
                      ▼                                      ▼
       ┌─────────────────────────────┐       ┌─────────────────────────────┐
       │ Determine that there is flare│       │ Determine that there is no flare│
       └─────────────────────────────┘       └─────────────────────────────┘
                      │                                      │
                      ▼◄─────────────────────────────────────┘
       ╱─────────────────────────────╲
      │  Loop 1: end                  │ ～ S526
       ╲─────────────────────────────╱
                      │
                      ▼
           ╭─────────────────╮
           │      End        │
           ╰─────────────────╯
```

# FIG. 35

OB pixel area

Effective pixel area

15

12, 13

FIG. 36

Light source 91

Optical system 94

R0

R2

R1

Distance measuring device 90

Image sensor 92

PX

Pixel 93

95

97

96

98

| INTERNATIONAL SEARCH REPORT | International application No. |
|---|---|
| | **PCT/JP2022/028891** |

**A. CLASSIFICATION OF SUBJECT MATTER**

*G01S 17/894*(2020.01)i; *G01S 7/487*(2006.01)i
FI: G01S17/894; G01S7/487

According to International Patent Classification (IPC) or to both national classification and IPC

**B. FIELDS SEARCHED**

Minimum documentation searched (classification system followed by classification symbols)

G01S 7/48 - G01S 7/51; G01S 17/00 - G01S 17/95

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2019/181518 A1 (PANASONIC INTELLECTUAL PROPERTY MANAGEMENT CO., LTD.) 26 September 2019 (2019-09-26) paragraphs [0016]-[0058], [0078]-[0089], [0091]-[0093], fig. 3 | 1-9, 13-14, 23 |
| A | | 10-12, 15-22 |
| Y | JP 10-227857 A (NIKON CORP) 25 August 1998 (1998-08-25) paragraph [0010], fig. 4, 7 | 1-9, 13-14, 23 |
| A | WO 2021/095382 A1 (PANASONIC INTELLECTUAL PROPERTY MANAGEMENT CO., LTD.) 20 May 2021 (2021-05-20) paragraphs [0056]-[0071], [0200]-[0203], [0256], fig. 1-2, 4A-4B | 1-23 |
| A | WO 2017/013857 A1 (PANASONIC INTELLECTUAL PROPERTY MANAGEMENT CO., LTD.) 26 January 2017 (2017-01-26) fig. 1, 3A-3C, 6 | 1-23 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 August 2022** | **06 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/028891**

| Patent document cited in search report | | | Publication date (day/month/year) | Patent family member(s) | | | Publication date (day/month/year) |
|---|---|---|---|---|---|---|---|
| WO | 2019/181518 | A1 | 26 September 2019 | US | 2021/0033730 | A1 | |
| | | | | paragraphs [0027]-[0073], [0097]-[0108], [0112]-[0124], fig. 3 | | | |
| | | | | CN | 111886517 | A | |
| JP | 10-227857 | A | 25 August 1998 | US | 6229598 | B1 | |
| | | | | column 2, lines 11-37, fig. 7, 11B-11C | | | |
| WO | 2021/095382 | A1 | 20 May 2021 | (Family: none) | | | |
| WO | 2017/013857 | A1 | 26 January 2017 | US | 2018/0135980 | A1 | |
| | | | | fig. 1, 3A-3C, 6 | | | |
| | | | | CN | 107850664 | A | |

Form PCT/ISA/210 (patent family annex) (January 2015)

**EP 4 379 423 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6676866 B